# EUROPEAN PATENT APPLICATION

(11) **EP 2 131 336 A1**
(43) Date of publication of application: **09.12.2009**
(21) Application number: 09007358.6
(22) Date of filing: 03.06.2009
(51) Int. Cl.: G07F 7/10

(54) **Information processing device, information processing method, program and communication system**

(30) Priority: 06.06.2008 JP 2008149824
(71) Applicant: Sony Corporation, Tokyo 108-0075 (JP)
(72) Inventor: Nakatsugawa, Yasumasa, Minato-ku Tokyo 108-0075 (JP); Kurita, Taro, Minato-ku Tokyo 108-0075 (JP); Hamada, Hiroaki, Minato-ku Tokyo 108-0075 (JP); Morita, Tadashi, Minato-ku Tokyo 108-0075 (JP); Takemura, Toshiharu, Minato-ku Tokyo 108-0075 (JP); Zhu, Yinglin, Minato-ku Tokyo 108-0075 (JP); Chiba, Miki, Minato-ku Tokyo 108-0075 (JP); Nakamura, Mitsuhiro, Minato-ku Tokyo 108-0075 (JP); Kanemoto, Toshinori, Minato-ku Tokyo 108-0075 (JP); Higashikawa, Toshimitsu, Minato-ku Tokyo 108-0075 (JP)
(74) Representative: Müller - Hoffmann & Partner

(57) **Abstract**

An information processing device includes: a data storage portion that can store user data used in a particular non-contact communication service and management information to manage the user data in different storage areas corresponding to different encryption methods and that has a first storage area storing management information corresponding to a first encryption method; an issuing information receiver that receives issuing information encrypted with the first encryption method from an issuing device delivering the issuing information to issue management information corresponding to a second encryption method; an issuing information decryption portion that decrypts the received issuing information with the first encryption method, based on the management information corresponding to the first encryption method stored in the first storage area; and a management information issuing portion that, based on the decrypted issuing information, issues the management information corresponding to the second encryption method and stores it in a second storage area.

## Description

### BACKGROUND OF THE INVENTION

### 1. Field of the Invention

The present invention relates to an information processing device, an information processing method, a program and a communication system.

### 2. Description of the Related Art

Electronic money systems, security systems and so on commonly use non-contact type IC cards equipped with reader/writers and IC chips capable of non-contact communication. Further, in recent years, mobile terminals are being developed that are equipped with these non-contact type IC chips and are capable of communication with reader/writers.

The IC cards are required to securely manage user data that is necessary in order to use a variety of services. A method is disclosed, for example in Japanese Patent Application Publication No. JP-A-2000-36014, in which, in order to prevent tampering with or stealing of management information stored on the IC card in order to manage user data, the management information is encrypted and transmitted to the IC card. Further, a method is disclosed, for example, in Japanese Patent Application Publication No. JP-A-2000-36021, in which, in order to improve security, such as data confidentiality, area definition areas and service definition areas used to manage a user data storage area have a hierarchical structure, and each definition area is locked with a key. Additionally, a method is disclosed in Japanese Patent No. 3890602, in which, to control access to data in the IC card, access authority is assigned to a plurality of area definition blocks that define use of a user block. In addition, a method is disclosed, for example, in Japanese Patent Application Publication No. JP-A-10-020780 and in Japanese Patent Application Publication No. JP-A-10-327142, in which a plurality of authentication keys and random numbers are used to perform mutual authentication between the IC card and the reader/writer.

### SUMMARY OF THE INVENTION

In recent years, a plurality of encryption methods have been proposed as encryption algorithms for the secure transmission of data. Particularly and most recently, to replace the generally previously used standard encryption method Data Encryption Standard (DES), a more reliable Advanced Encryption Standard (AES) is being more commonly used.

However, the technologies disclosed in the above 5 patent specifications do not assume a case in which a single IC card is compatible with a plurality of encryption algorithms (encryption methods). If a single IC card is not compatible with a plurality of encryption algorithms, the following problems occur.

For example, a service providing company providing a service using an IC card cannot select an encryption algorithm for use from a plurality of encryption algorithms, and cannot use a plurality of encryption algorithms concurrently. Further, services from a plurality of service providing companies who have selected different encryption algorithms cannot be provided on a single IC card.

In addition, sometimes a given service providing company may wish to switch from a currently used encryption algorithm to a new encryption algorithm (switch from using DES to using AES, for example). In such a case, using known technology, it is necessary to recover IC cards that are compatible with the previous encryption algorithm (DES) and distribute IC cards that are compatible with the new encryption algorithm (AES). For this reason, it is not possible to smoothly switch the encryption algorithm used with the IC card, resulting in large amounts of effort, time and cost required to switch over the algorithm.

To address this, the present invention allows a single information processing device that is capable of non-contact communication to be flexibly compatible with a plurality of encryption methods.

According to an embodiment of the present invention, there is provided an information processing device including: a data storage portion that has at least a first storage area storing first management information corresponding to a first encryption method and that is capable of storing user data used in a particular service using non-contact communication and management information used to manage the user data in different storage areas for each of a plurality of different encryption methods; an issuing information receiver that receives issuing information that is encrypted using the first encryption method from an issuing device that delivers the issuing information to issue second management information corresponding to a second encryption method; an issuing information decryption portion that decrypts the received issuing information with the first encryption method, based on the first management information corresponding to the first encryption method that is stored in the first storage area of the data storage portion; and a management information issuing portion that, based on the decrypted issuing information, issues the second management information corresponding to the second encryption method and stores the second management information in a second storage area in the data storage portion.

The storage area of the data storage portion may have a hierarchical structure formed of a section definition area that is established for at least each of the plurality of encryption methods with which the information processing device is compatible, and of at least one area definition area that belongs to the section definition area. The management information may include at least section definition information that is stored in the section definition area, and area definition information that is stored in the area definition area, and the first storage area of the data storage portion may include at least a first section definition area that stores first section definition information corresponding to the first encryption method. The first management information may include at least the first section definition information, and the first section definition information may include a first key used for authentication to access the first section definition area and identification information for the first encryption method. The issuing information, as the second management information, may be section issuing information used to issue second section definition information corresponding to the second encryption method, and the section issuing information may include a second key used for authentication to access a second section definition area, and identification information for the second encryption method. The information processing device may further include: a mutual authentication portion that performs mutual authentication with the issuing device with the first encryption method, using the first encryption method identification information stored in the first section definition area. When the mutual authentication performed by the mutual authentication portion is successful, the issuing information receiver may receive the section issuing information from the issuing device, the section issuing information being encrypted with the first encryption method using the first key, the decryption portion may use the first key stored in the first section definition area to decrypt the received section issuing information with the first encryption method, and the management information issuing portion, based on the decrypted section issuing information, may issue the second section definition information that includes the second key and the second encryption method identification information, and store the second section definition information in the second section definition area that is the second storage area of the data storage portion.

According to another embodiment of the present invention, there is provided an information processing device that includes: a data storage portion that has at least a first storage area storing first management information corresponding to a first encryption method and that is capable of storing user data used in a particular service using non-contact communication and management information used to manage the user data in different storage areas for each of a plurality of different encryption methods; an issuing information receiver that receives issuing information that is encrypted using the first encryption method from an issuing device that delivers the issuing information to issue second management information corresponding to the first encryption method; an issuing information decryption portion that decrypts the received issuing information with the first encryption method, based on the first management information corresponding to the first encryption method that is stored in the first storage area of the data storage portion; and a management information issuing portion that, based on the decrypted issuing information, issues the second management information corresponding to the first encryption method and stores the second management information in a second storage area in the data storage portion.

The storage area of the data storage portion may have a hierarchical structure formed of at least a system definition area established corresponding to each of a non-contact communication system with which the information processing device is compatible, at least one section definition area for each of the plurality of encryption methods with which the information processing device is compatible, the section definition area belonging to the system definition area, and at least one area definition area belonging to the section definition area.
The management information may include at least system definition information that is stored in the system definition area, section definition information that is stored in the section definition area, and area definition information that is stored in the area definition area, and the first storage area of the data storage portion includes at least a first system definition area that stores a first system definition information corresponding to a first non-contact communication system and a first section definition area that stores first section definition information corresponding to the first encryption method, the first section definition area belonging to the first system definition area. The first management information may include at least the first system definition information and the first section definition information, the first system definition information including a first system code indicating the first non-contact communication system, and the first section definition information including a first key used for authentication to access the first section definition area and identification information for the first encryption method. The issuing information, as the second management information, is system issuing information to issue second system definition information corresponding to a second non-contact communication system and second section definition information that belongs to the second system definition information and that corresponds to the first encryption method, and the system issuing information may include a second system code indicating the second non-contact communication system and a second key used for authentication to access the second section definition area. The information processing device may further include: a key storage portion that stores an authorization key to newly issue the system definition information; and a mutual authentication portion that performs mutual authentication with the issuing device with the first encryption method, using the first encryption method identification information stored in the first section definition area. When the mutual authentication performed by the mutual authentication portion is successful, the issuing information receiver may receive the system issuing information encrypted with the first encryption method using one of the first key and the authorization key from the issuing device. The issuing information decryption portion may use one of the first key stored in the first section definition area and the authorization key stored in the key storage portion to decrypt the received system issuing information with the first encryption method, and the management information issuing portion, based on the decrypted system issuing information, may issue the second system definition information that includes the second system code and the second section definition information that includes the second key and the first encryption method identification information, and store the second system definition information and the second section definition information in the second system definition area and the second section definition area respectively, the second system definition area and the second section definition area being the second storage area of the data storage portion.

The first storage area and the second storage area of the data storage portion may respectively store the first encryption method identification information and the second encryption method identification information. The information processing device may further include: a communication portion that performs non-contact communication with a service provider device that delivers the particular service; and a mutual authentication portion that, when an authentication request is received from the service provider device by the communication portion, based on one of the first and the second encryption method identification information stored in one of the first and the second storage area, selects the storage area corresponding to an encryption method specified by the authentication portion, and uses the management information stored in the selected storage area to perform mutual authentication with the service provider device with the encryption method specified in the authentication request.

The information processing device may further include: a communication portion that performs non-contact communication with an external device; and an encryption processing portion compatible with the plurality of encryption methods that encrypts and decrypts, with one of the plurality of encryption methods, data communicated by non-contact communication by the communication portion. Using the encryption processing portion, the issuing decryption portion may decrypt the issuing information received from the issuing device with the first encryption method.

The first encryption method may be a single representative encryption method that is selected from among the encryption methods with which the encryption processing portion is compatible, and the first encryption method may be more reliable than the second encryption method.

The information processing device may be one of an IC card and a mobile terminal equipped with an IC card portion capable of non-contact communication with an external device.

According to another embodiment of the present invention, there is provided an information processing method including the steps of: storing, by an information processing device, first management information corresponding to a first encryption method in a first storage area of a data storage portion that is capable of storing user data used in a particular service using non-contact communication and management information used to manage the user data in different storage areas for each of a plurality of different encryption methods; receiving, by the information processing device, issuing information that is encrypted using the first encryption method from an issuing device that delivers the issuing information to issue second management information corresponding to a second encryption method; decrypting, by the information processing device, the received issuing information using the first encryption method, based on the first management information corresponding to the first encryption method stored in the first storage area of the data storage portion; and issuing, by the information processing device, based on the decrypted issuing information, the second management information corresponding to the second encryption method, and storing the second management information in a second storage area of the data storage portion.

According to another embodiment of the present invention, there is provided an information processing method including the steps of storing, by an information processing device, first management information corresponding to a first encryption method in a first storage area of a data storage portion that is capable of storing user data used in a particular service using non-contact communication and management information used to manage the user data in different storage areas for each of a plurality of different encryption methods; receiving, by the information processing device, issuing information that is encrypted using the first encryption method from an issuing device that delivers the issuing information to issue second management information corresponding to the first encryption method; decrypting, by the information processing device, the received issuing information using the first encryption method, based on the first management information corresponding to the first encryption method stored in the first storage area of the data storage portion; and issuing, by the information processing device, based on the decrypted issuing information, the second management information corresponding to the first encryption method, and storing the second management information in a second storage area of the data storage portion.

According to another embodiment of the present invention, there is provided a program that includes instructions that command a computer to perform the steps of: storing first management information corresponding to a first encryption method in a first storage area of a data storage portion that is capable of storing user data used in a particular service using non-contact communication and management information used to manage the user data in different storage areas for each of a plurality of different encryption methods; receiving issuing information that is encrypted using the first encryption method from an issuing device that delivers the issuing information to issue second management information corresponding to a second encryption method; decrypting the received issuing information using the first encryption method, based on the first management information corresponding to the first encryption method stored in the first storage area of the data storage portion; and issuing, based on the decrypted issuing information, the second management information corresponding to the second encryption method, and storing the second management information in a second storage area of the data storage portion.

According to another embodiment of the present invention, there is provided a program that includes instructions that command a computer to perform the steps of: storing first management information corresponding to a first encryption method in a first storage area of a data storage portion that is capable of storing user data used in a particular service using non-contact communication and management information used to manage the user data in different storage areas for each of a plurality of different encryption methods; receiving issuing information that is encrypted using the first encryption method from an issuing device that delivers the issuing information to issue second management information corresponding to the first encryption method; decrypting the received issuing information using the first encryption method, based on the first management information corresponding to the first encryption method stored in the first storage area of the data storage portion; and issuing, based on the decrypted issuing information, the second management information corresponding to the first encryption method, and storing the second management information in the second storage area of a data storage portion.

According to another embodiment of the present invention, there is provided a communication system including: an issuing device; and an information processing device that is capable of communication with the issuing device. The issuing device includes: an issuing information encryption portion that encrypts with a first encryption method issuing information used to issue second management information corresponding to a second encryption method; and an issuing information transmitter that transmits the issuing information encrypted with the first encryption method to the information processing device. The information processing device includes: a data storage portion that has at least a first storage area storing first management information corresponding to the first encryption method and that is capable of storing user data used in a particular service using non-contact communication and management information used to manage the user data in different storage areas for each of a plurality of different encryption methods; an issuing information receiver that receives the issuing information encrypted with the first encryption method from the issuing device; an issuing information decryption portion that decrypts the received issuing information using the first encryption method, based on the first management information corresponding to the first encryption method stored in the first storage area of the data storage portion, and a management information issuing portion that, based on the decrypted issuing information, issues the second management information corresponding to the second encryption method and stores the second management information in a second storage area of the data storage portion.

According to another embodiment of the present invention, there is provided a communication system including: an issuing device; and an information processing device that is capable of communication with the issuing device. The issuing device includes: an issuing information encryption portion that encrypts with a first encryption method issuing information used to issue second management information corresponding to the first encryption method; and an issuing information transmitter that transmits the issuing information encrypted with the first encryption method to the information processing device. The information processing device includes: a data storage portion that has at least a first storage area storing first management information corresponding to the first encryption method and that is capable of storing user data used in a particular service using non-contact communication and management information used to manage the user data in different storage areas for each of a plurality of different encryption methods; an issuing information receiver that receives the issuing information encrypted with the first encryption method from the issuing device; an issuing information decryption portion that decrypts the received issuing information using the first encryption method, based on the first management information corresponding to the first encryption method stored in the first storage area of the data storage portion; and a management information issuing portion that, based on the decrypted issuing information, issues the second management information corresponding to the first encryption method and stores the second management information in a second storage area of the data storage portion.

According to the embodiments of the present invention described above, a single information processing device that is capable of non-contact communication can be flexibly compatible with a plurality of encryption methods.

### BRIEF DESCRIPTION OF THE DRAWINGS

FIG. 1 is a schematic diagram showing a communication system according to a first embodiment of the present invention;
FIG. 2 is an explanatory diagram showing encryption algorithms with which an IC card according to the present embodiment is compatible;
FIG. 3 is a schematic diagram showing the main portions of the communication system according to the present embodiment;
FIG. 4 is a block diagram showing an example of the structure of an IC card portion that performs non-contact communication according to the present embodiment;
FIG. 5 is a block diagram showing an example of the structure of a control portion and a memory of the IC card portion according to the present embodiment;
FIG. 6 is a block diagram showing functions of an issuing device and the IC card according to the present embodiment for the encryption and decryption of issuing information.
FIG. 7 is a pattern diagram showing a logical file structure portion of the memory of the IC card according to the present embodiment;
FIG. 8 is a pattern diagram showing a specific example of the logical file structure according to the present embodiment;
FIG. 9 is a pattern diagram showing a specific example of the hierarchical structure of area definition information and service definition information according to the present embodiment;
FIG. 10 is a pattern diagram showing a specific example of a logical file structure that is compatible with a single encryption method;
FIG. 11 is a pattern diagram showing a specific example of the a logical file structure that is compatible with a single encryption method;
FIG. 12 is a sequence diagram showing an access sequence between the IC card and a service providing company device reader/writer according to the present embodiment, when the IC card is being used;
FIG. 13 is a flow chart showing an S10 process in FIG. 12;
FIG. 14 is a flow chart showing an S20 process in FIG. 12;
FIG. 15 is a flow chart showing an S30 process in FIG. 12;
FIG 16 is a flow chart showing an S40 process in FIG. 12;
FIG. 17 is a flow chart showing an S50 process in FIG. 12;
FIG. 18 is a flow chart showing an S60 process in FIG. 12;
FIG. 19 is a flow chart showing an S70 process in FIG. 12;
FIG. 20 is an explanatory diagram showing the structure of system issuing information according to the present embodiment;
FIG. 21 is a pattern diagram showing processes for the encryption and decryption of the system issuing information by the issuing device and the IC card according to the present embodiment;
FIG. 22 is an explanatory diagram showing the structure of section issuing information according to the present embodiment;
FIG. 23 is a pattern diagram showing processes for the encryption and decryption of the section issuing information by the issuing device and the IC card according to the present embodiment;
FIG. 24 is a pattern diagram showing a specific example of newlyissuing system definition information or section definition information in the logical file structure portion of the IC card according to the present embodiment;
FIG. 25 is a sequence diagram showing the sequence of a system issuing process by the issuing device reader/writer and the IC card according to the present embodiment;
FIG. 26 is a flow chart showing a system issuing process of the IC card according to the present embodiment;
FIG. 27 is a sequence diagram showing the sequence of a section issuing process by the issuing device reader/writer and the IC card according to the present embodiment; and
FIG. 28 is a flow chart showing a section issuing process of the IC card according to the present embodiment.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### First embodiment

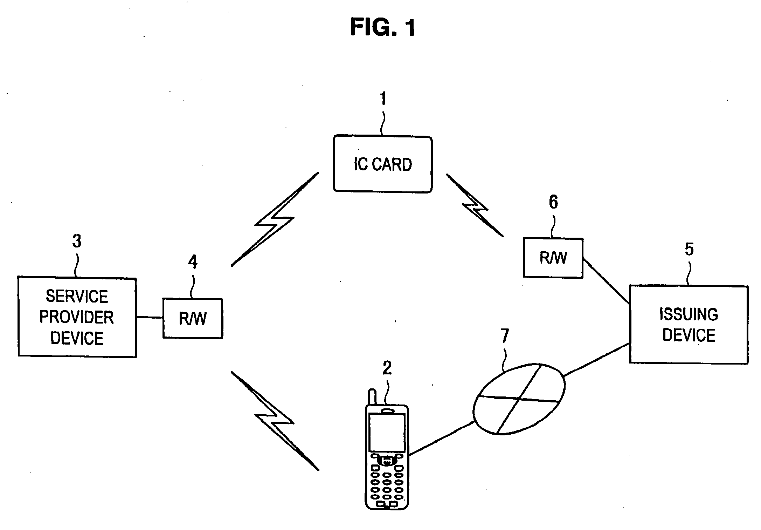

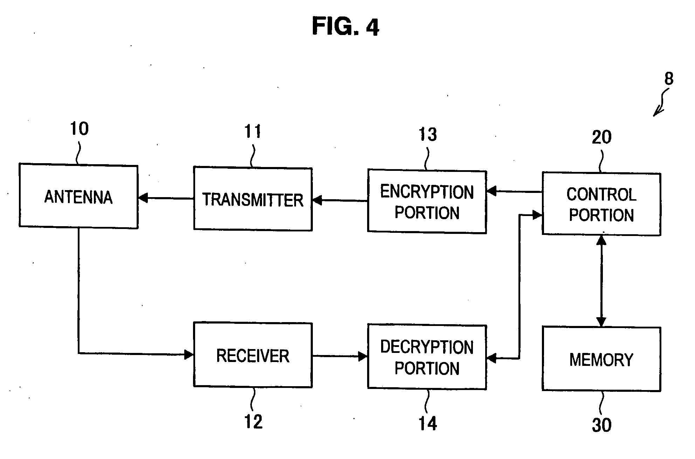

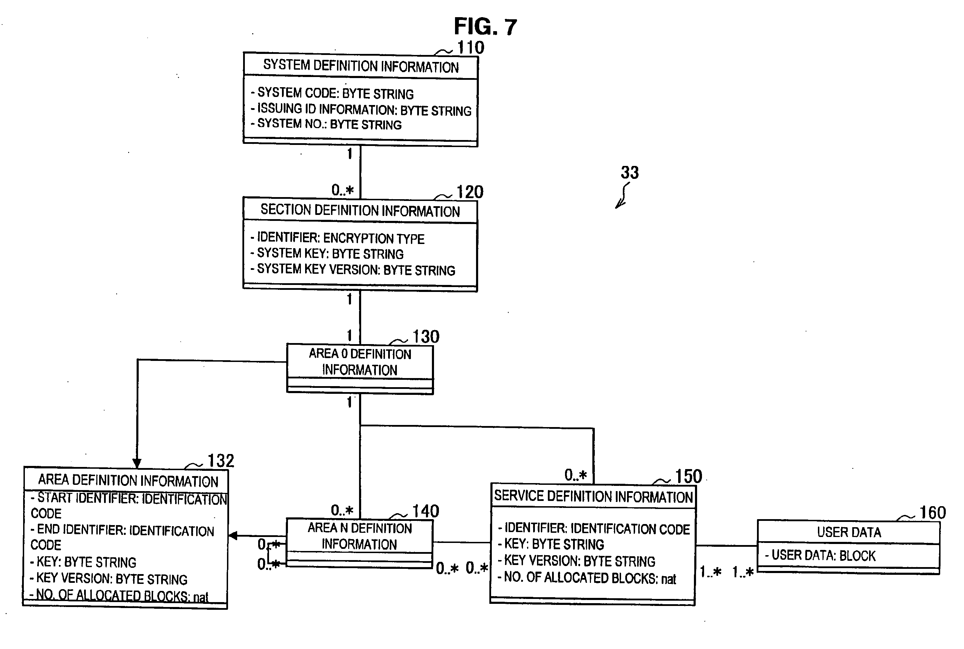

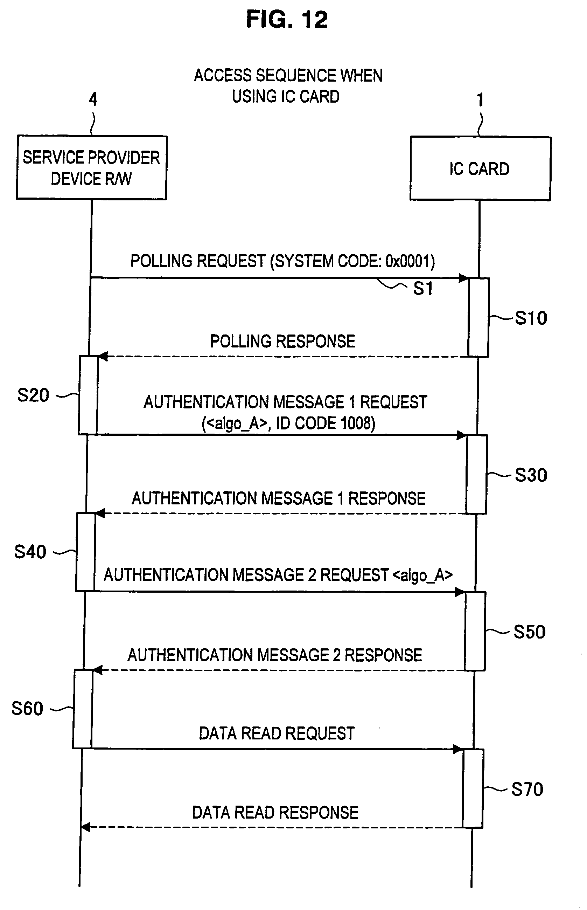

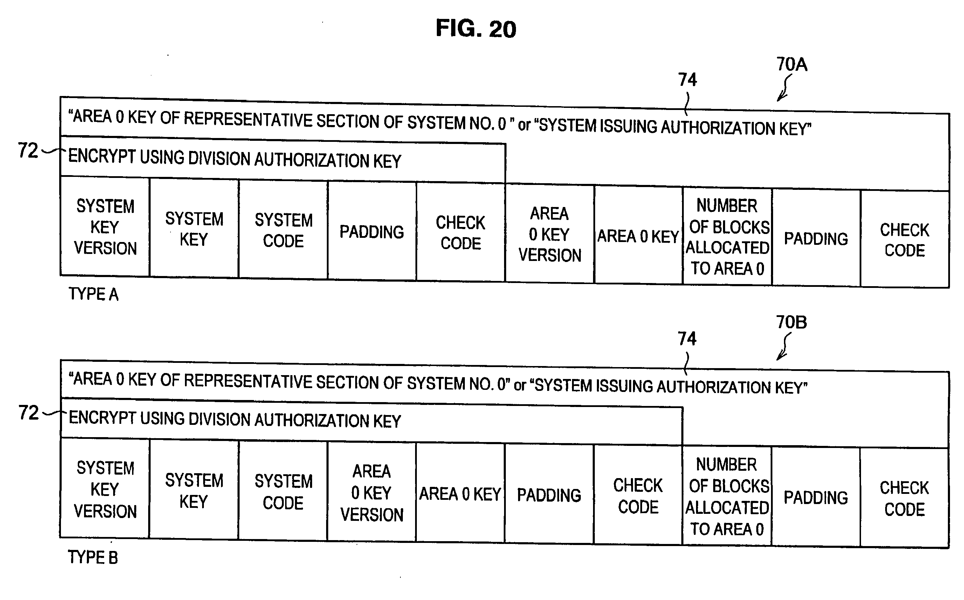

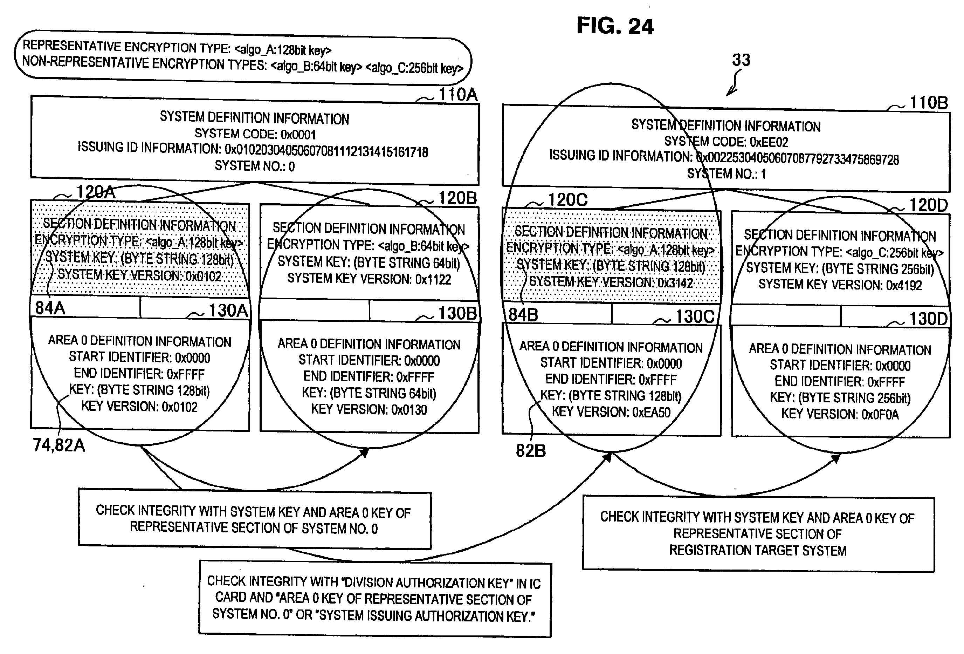

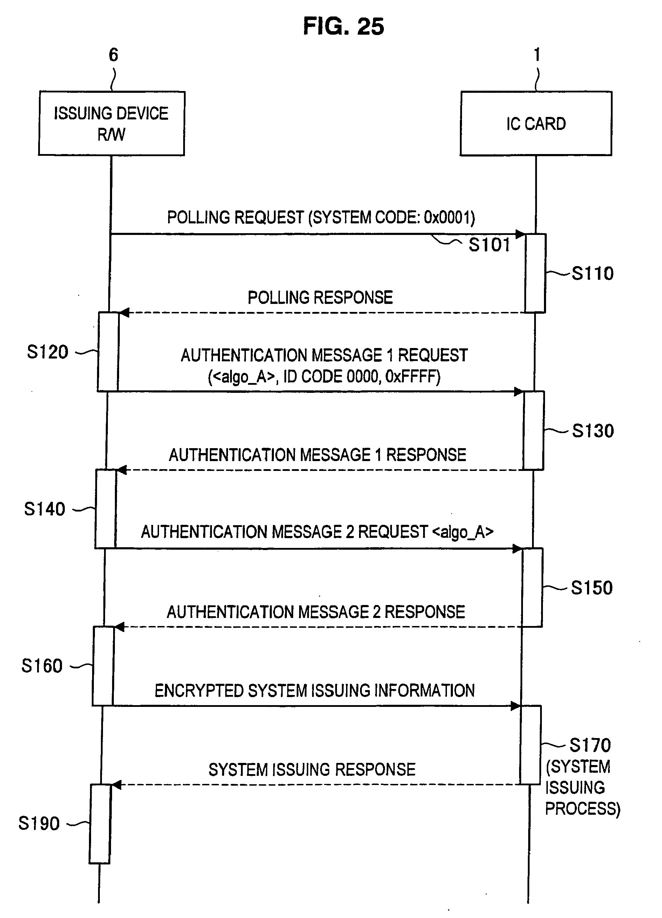

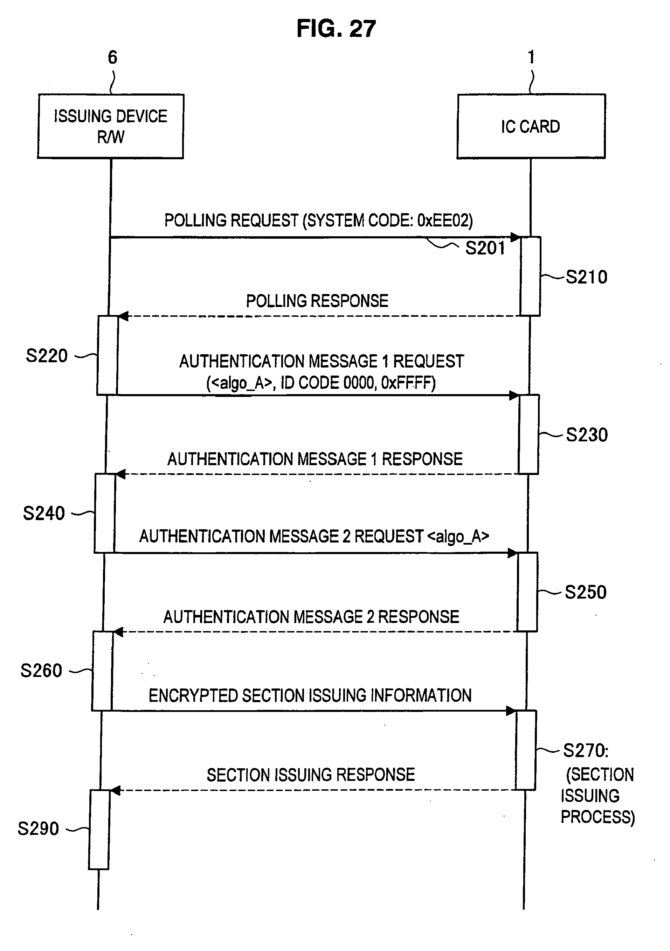

A first embodiment of the present invention will be explained in the order shown below.
1. Overall structure and features of communication system: FIG. 1 to FIG. 3
2. Structure of IC card (information processing device): FIG. 4 to FIG. 6
3. Logical file structure of IC card: FIG. 7 to FIG. 11
4. Use of IC card: FIG. 12 to FIG. 19
5. Structure and encryption of issuing information: FIG. 20 to FIG. 23
6. Overview of definition information issuing process: FIG. 24
7. System issuing process: FIG. 25 to FIG. 26
8. Section issuing process: FIG. 27 to FIG. 28
9. Effects

### 1. Overall structure and features of communication system: FIG. 1 to FIG. 3

First, an outline of a communication system according to the first embodiment of the present invention will be explained with reference to FIG. 1. FIG. 1 is a schematic diagram showing the communication system according to the present embodiment.

As shown in FIG. 1, the communication system according to the present embodiment includes: an information processing device (for example, a non-contact type IC card 1, a mobile terminal 2) that is capable of non-contact communication with an external device; a service providing company device 3; a reader/writer 4 that is connected to the service providing company device 3; an issuing device 5 that generates issuing information; and a reader/writer 6 that is connected to the issuing device 5.

The information processing device is a device equipped with a non-contact type IC chip (not shown in the figures, and hereinafter referred to as the "IC chip") that is an electronic circuit for performing non-contact communication with an external device. The external device is a device such as the service providing company device 3 or the issuing device 5 that is equipped with the reader/writer 4 or the reader/writer 6 to perform non-contact communication. As shown in FIG. 1, the information processing device is a device capable of non-contact communication, such as, for example, the non-contact type IC card 1, or the mobile terminal 2.

The non-contact type IC card 1 (hereinafter referred to as the IC card 1) includes, in the thin card coating, an antenna (not shown in the figures) to perform non-contact communication with the reader/writer (the reader/writer is a data reading device) of the external device and an IC chip (not shown in the figures) containing an IC that performs predetermined processing. The IC card 1 can perform non-contact wireless communication with the reader/writer 4 of the service providing company device 3 and the reader/writer 6 of the issuing device 5. Therefore, it is possible to read and write data in the IC card 1 simply by positioning the IC card 1 within the effective range of the electromagnetic waves generated by the reader/writer 4 or the reader/writer 6 (in other words, by passing the IC card 1 over the reader/writer 4 or the reader/writer 6). Accordingly, the IC card 1 does not need to be inserted into and extracted from the reader/writer 4 or the reader/writer 6 and is therefore easy to use, allowing rapid data reception and transmission. As it cannot easily be modified or altered, safety is high, and by rewriting the data, the card itself can be re-used time and time again, thus furnishing a high degree of convenience.

Due to its convenience, the IC card 1 is applied to IC card systems delivering a variety of services. For example, the IC card 1 is used in electronic money systems, public transport ticket barrier systems, in security systems such as entrance to buildings or rooms or for personal computer (PC) log in and so on, and in electronic clearing systems. More specifically, the IC card 1 is used, for example, in the following variety of applications (1) to (6). Further, a multi-application type card is being developed in which a single one of the IC card 1 can combine a plurality of these functions, and the variety of types of the IC card 1 is diversifying more and more.

(1) Electronic money cards, such as electronic money, points, coupons and so on, that store an electronic value (data that has currency or a monetary value that corresponds to currency).
(2) Commuter passes or seat reservation tickets for public transport, such as trains, buses, or expressways etc., public transport cards that store pre-paid type fare data etc.
(3) Personal identity cards, such as employee ID cards that are used to verify identity, or used as keys to manage working hours, entry and egress from buildings, log in to PCs etc., and student identity cards, that are used as identity cards and so on.
(4) Various store and facility member cards, point cards, coupon cards and so on.
(5) Electronic ticket cards that store electronic tickets for movie theaters, concert venues, sports arenas, amusement arcades and so on.
(6) Electronic clearing cards used for electronic transactions, including Internet shopping, the distribution of movie and music content, the buying and selling of financial products such as marketable securities/deposits and so on.

In addition, the mobile terminal 2 is a portable information processing device equipped with the above-described IC chip, and is a mobile device, such as, for example, a mobile telephone, a wristwatch, a personal digital assistant (PDA), a mobile game console, or a portable image/audio player. The mobile terminal 2, in the same way as the above-described IC card 1, can perform non-contact communication with a reader/writer and use the variety of services described above.

The service providing company device 3 is a host device that provides a specific service using an IC card. The service providing company device 3 is, for example, a public transport automatic ticket barrier, a cash register device provided at a store such as a convenience store, a mobile terminal (for example, a PC or the like) that is used for electronic transactions over the Internet and so on, an automotive vending machine for a variety of products, public transport tickets or the like, a point of sale (POS) terminal, a kiosk terminal, a financial institution automated teller machine (ATM) and the like. The service providing company device 3 is provided with the reader/writer 4 to perform non-contact communication with the IC card 1 and the mobile terminal 2 and so on. The reader/writer 4 may be built into and integrated into the service providing company device 3 or may be a separate device that can be connected to the service providing company device 3 via a wired or wireless connection.

By positioning the information processing device, such as the above-described IC card 1 or the mobile terminal 2, within the communication range of the reader/writer 4 of the service providing company device 3, information relating to a specific service can be communicated via non-contact communication between the IC card 1 and the service providing company device 3. In this way, the IC card 1 or the mobile terminal 2 user can enjoy the above-described variety of services.

Further, the issuing device 5 generates issuing information to issue management data that is stored in a storage area in the information processing device, such as the above-described IC card 1 or the mobile terminal 2, and delivers the issuing information to the information processing device. The management information is information to manage user data used in the above-described variety of services by the information processing device such as the IC card 1, and the issuing information is information used to issue the management information. The management information and the issuing information will be described later in detail. The issuing device 5 encrypts the generated issuing information using a predetermined encryption method, and delivers the issuing information that has been encrypted (hereinafter referred to as the "encrypted issuing information") to an information processing device such as the IC card 1 or the mobile terminal 2.

To achieve the above-described functions, the issuing device 5 is provided with the reader/writer 6 to perform non-contact communication with the IC card 1 or the mobile terminal 2. The reader/writer 6 may be built into and integrated into the issuing device 5 or may be a separate device that can be connected to the issuing device 5 via a wired or wireless connection. Further, the issuing device 5 is capable of communication with the mobile terminal 2 via a network 7.

In the present embodiment, the IC card 1 acquires encrypted issuing information from the issuing device 5 by performing non-contact communication with the reader/writer 6 of the issuing device 5. In this way, for example, when the IC card 1 is shipped from a card manufacturing plant, by passing the IC card 1 over the reader/writer 6 of the issuing device 5, encrypted issuing information is delivered to the IC card 1 from the issuing device 5.

Meanwhile, the mobile terminal 2 is connected to the issuing device 5 via the network 7, and by communicating with the issuing device 5 via the network 7, the mobile terminal 2 acquires encrypted issuing information from the issuing device 5. In this case, the issuing device 5 is a server device that is capable of network communication, and transmits the generated issuing information to the mobile terminal 2 via the network 7. In this way, by the mobile terminal 2 accessing the issuing device 5 via the network 7 at a selected timing, encrypted issuing information can be delivered to the mobile terminal 2 from the issuing device 5. Note that the network 7 is a communication network mutually connecting the issuing device 5 and the mobile terminal 2 allowing them to communicate with each other, and may be a wired or wireless network. The network 7 may be, for example, the Internet, a telephone network, a public circuit such as a satellite communication network, any kind of local area network (LAN) including Ethernet (registered trademark), or a leased line network, such as a wide area network (WAN), or an internet protocol-virtual private network (IP-VPN).

In this way, the issuing device 5 that generates encrypted issuing information, and the reader/writer 6 that transmits the encrypted issuing information to the IC card 1 can be integrated as a single device, or can be formed of different devices. In order to generate the above-described encrypted issuing information, the unencrypted issuing information text can be encrypted using a predetermined authorization key. For this reason, it is possible, for example, for even general computer devices, such as a personal computer (hereinafter referred to as the "PC") to perform a process to generate encrypted issuing information. Therefore, the PC that is the issuing device 5 can generate the encrypted issuing information, save the encrypted issuing information in the reader/writer 6 and transmit the encrypted issuing information to the IC card 1. In this case, the reader/writer 6 of the issuing device 5 and the reader/writer 4 of the service providing company device 3 can be the same reader/writer. On the other hand, the issuing device 5 that has functions to generate the encrypted issuing information can be integrated with the reader/writer 6 that has functions to transmit the encrypted issuing information to the IC card 1. In this case, the authorization key and the issuing information saved securely in the reader/writer 6 are used to generate the encrypted issuing information inside the reader/writer 6 and the encrypted issuing information is transmitted from the reader/writer 6 to the IC card 1.

The overall structure of the communication system according to the present embodiment is briefly explained above. Next, features of the communication system according to the present embodiment will be briefly explained. Note that the following explanation mainly describes the information processing device capable of non-contact communication as the IC card 1, but the explanation is the same in a case in which the information processing device is the mobile terminal 2.

The features of the communication system according to the present embodiment include the logical file structure of the IC card 1 that is compatible with a plurality of encryption algorithms (encryption methods) and the construction method of the logical file structure. In other words, "user data" to use a specific service using non-contact communication, and "management information" to manage the user data are stored in a storage area inside the IC card 1 according to the present embodiment. The "management information" includes, for example, various data to be explained later, such as "system definition information," "section definition information," "area 0 definition information," "area definition information" and "service definition information," and has a hierarchical logical file structure (refer to FIG. 7 to FIG. 9). The IC card 1 is compatible with a plurality of different encryption methods (encryption algorithms), and the above-described management information is divided logically into a different storage area for each of a plurality of encryption methods in the IC card 1 and stored in the respective storage areas (the section definition area and its subordinate definition areas, which will be explained later). In order to issue the management information corresponding to each of the encryption methods in the IC card 1, the "issuing information" is delivered from the issuing device 5 to the IC card 1. The "issuing information" is, for example, "system issuing information" and "section issuing information" to be explained later.

When issuing new management information in the IC card 1 (for example, when issuing the system definition information or the section definition information), the issuing device 5 uses the "authorization key" saved securely in the IC card 1 to encrypt the above-described issuing information and deliver it to the IC card 1. The "authorization key" is, for example, a "system key," an "area 0 key," a "system issuing authorization key," or a "division authorization key" or the like, to be explained later. Encrypting the issuing information using the authorization key prevents tampering with or stealing of the issuing information delivered from the issuing device 5 to the IC card 1, and the integrity of the issuing information can be verified in the IC chip of the IC card 1.

Further, the IC chip in the IC card 1 is equipped with encryption processing circuits (for example, processors) that are compatible with a plurality of different encryption algorithms (for example, DES and AES). These encryption processing circuits are an example of the encryption processing portion of the present invention. From among the plurality of encryption algorithms with which the encryption processing circuits are compatible, a single representative encryption algorithm is set (the representative encryption algorithm is a first encryption method). It is desirable for the set representative encryption algorithm (the first encryption method, for example, AES) to be a more reliable encryption algorithm than other encryption algorithms (a second encryption method, for example, DES).

Then, the issuing device 5 uses the representative encryption algorithm (AES, for example) to encrypt the issuing information used to issue the management information that is compatible with another encryption algorithm (DES, for example) (for example, the section definition information and the area 0 definition information for DES) and saves the encrypted issuing information in a memory. After that, when the IC card 1 is passed over the reader/writer 6 of the issuing device 5, the issuing device 5 transmits the encrypted issuing information to the IC card 1 by non-contact communication using the representative encryption algorithm (AES). When the IC card 1 receives the issuing information encrypted using the representative encryption algorithm (AES) from the issuing device 5, the IC card 1 uses an encryption processing circuit that is compatible with the above-described AES encryption algorithm to decrypt the issuing information received from the issuing device 5 using the representative encryption algorithm (the first encryption method, AES). In the decryption process, the IC card 1 uses the management information (the section definition information or the area 0 definition information for AES) that is compatible with the first encryption method and that is stored in a first storage area (the AES section definition information area or the like) of a data storage portion in the IC card 1. Further, based on the decrypted issuing information, the IC card 1 issues management information that is compatible with a second encryption method (for example, the section definition information or area 0 definition information for another encryption algorithm, such as DES), and stores it in a second storage area in the data storage portion.

With this configuration, by using a highly reliable representative encryption algorithm (the first encryption method, such as AES) to encrypt and transmit the issuing information of another encryption algorithm (the second encryption method, such as DES), the management information of the other encryption algorithm can be securely issued by the IC card 1. Therefore, tampering with or stealing of the issuing information can be prevented and the integrity of the issuing information can be verified in the IC chip of the IC card 1.

In addition, when using a specific service with the IC card 1, the IC card 1 is passed over the reader/writer 4 of the service providing company device 3. When this is done, from the representative encryption algorithm (the first encryption method, AES) or the other encryption algorithm (the second encryption method, DES) with which the IC card 1 is compatible, the IC card 1 identifies the encryption algorithm specified by the reader/writer 4. Then, the IC card 1 and the reader/writer 4 can use the specified encryption algorithm to perform mutual authentication, and perform non-contact communication of user data and commands etc. relating to the specific service. In this way, the single IC card 1 can be flexibly compatible with a plurality of encryption algorithms. Also, when a certain service or non-contact communication system switches between encryption algorithms, such as switching, for example, from DES to AES, it is possible to smoothly and securely switch the encryption method without recalling the existing IC card 1 and re-distributing the new IC card 1. The structure of the communication system according to the present embodiment that has the above-described features will be described in more detail below.

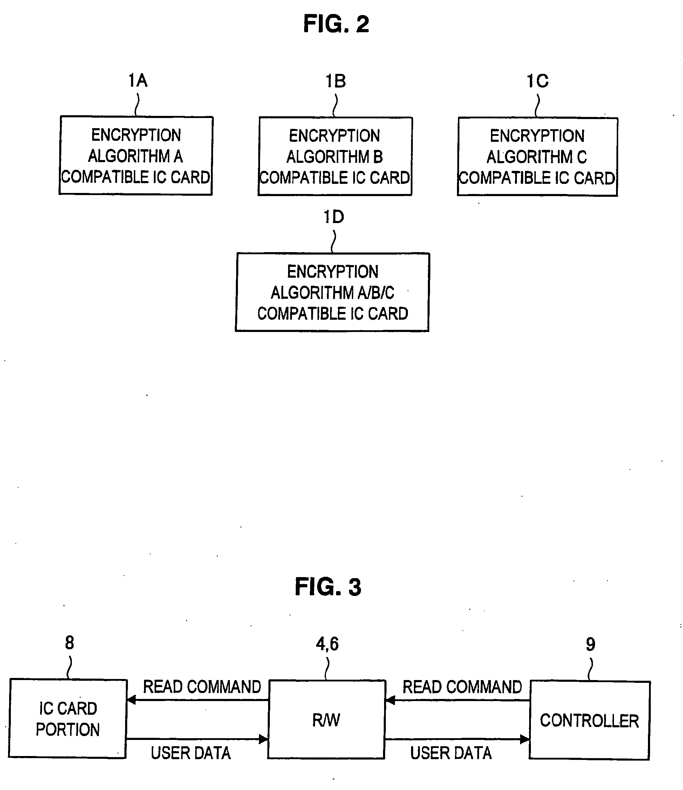

Next, an assumed situation for the communication system according to the present embodiment will be explained with reference to FIG. 2. FIG. 2 is an explanatory diagram showing encryption algorithms that are compatible with the IC cards 1A to 1D according to the present embodiment.

As shown in the example in FIG. 2, the IC card 1A is only compatible with the encryption algorithm A, the IC card 1B is only compatible with the encryption algorithm B, and the IC card 1C is only compatible with the encryption algorithm C. In contrast, the IC card 1D is compatible with the plurality of all the encryption algorithms A, B and C. In the communication system according to the present embodiment, it is assumed that the hardware of the IC card 1 is configured to be compatible with a plurality of encryption algorithms.

In the above-mentioned Japanese Patent Application Publication No. JP-A-2000-36014, technology is disclosed by which, when management information to manage user data is saved on the IC card, the management information is encrypted on the reader/writer side and then transmitted to the IC card, in order to prevent tampering with or stealing of the management information. However, this technology assumes that the IC card 1 is only compatible with a single specific encryption algorithm (the IC card 1A, 1B and 1C in FIG. 2).

In the present embodiment also, when the reader/writer 6 of the issuing device 5 transmits issuing information to the IC card 1, the issuing information is encrypted. However, in the present embodiment, it is assumed that the IC card 1 is compatible with a plurality of encryption algorithms, as with the IC card ID shown in FIG. 2. In this case, there are specific features to the way in which the management information is set and saved in the IC card 1. More specifically, one specific feature of the present embodiment is that, when the IC card 1 that is compatible with a plurality of encryption algorithms A, B and C, is equipped with hardware (encryption processing circuits and the like), storage areas, which store the management information (the section definition information and the like to be explained later) in the IC card 1, are provided separately for each of the encryption algorithms.

Here, the encryption algorithm (the encryption method) may be a selected encryption method, such as for example, a common key encryption method, such as DES, AES, Camellia or CLEFIA and the like, or may be a public key encryption method, such as the Rivest Shamir Adleman (RSA) algorithm and the like. In terms of security, the reliability and the encryption processing load etc. of each of these encryption methods is excellent.

Next, the main portions of the communication system according to the present embodiment will be briefly explained with reference to FIG. 3. FIG. 3 is a schematic diagram showing the main portions of the communication system according to the present embodiment.

As shown in FIG. 3, the main portions of the communication system are an IC card portion 8 that is mounted on an information processing device such as the IC card 1 or the mobile terminal 2, a controller 9 of the service providing company device 3 or the issuing device 5 (host device) and the reader/writer 4 of the service providing company device 3 or the reader/writer 6 of the issuing device 5.

The IC card portion 8 is equipped with an antenna to perform non-contact communication with the reader/writer 4 or the reader/writer 6, an IC chip and a memory (refer to FIG. 4). The IC card portion 8 may have a selected form, and may be, for example, the IC card 1 that has the form of a card, or may be built into the mobile terminal 2 that is a watch, a mobile telephone or the like. The IC card portion 8 and the reader/writer 4 or the reader/writer 6 perform, for example, wireless or wired communication using a predetermined communication method such as "ISO/IEC 18092" or the like. The reader/writer 4 or the reader/writer 6 may be connected to the controller 9, via a wired or a wireless connection, for example.

With this configuration, the controller 9 transmits specific commands, such as a read command, for example, to the IC card portion 8 via the reader/writer 4 or the reader/writer 6. In response to the read command, the IC card portion 8 reads user data stored in the memory and transmits the user data to the controller 9 via the reader/writer 4 or the reader/writer 6.

In this way, the communication system according to the present embodiment is formed of an IC card system in which non-contact communication is performed between the IC card portion 8 of the IC card 1 or the mobile terminal 2 and the reader/writer 4 or the reader/writer 6 of the host device. By generating a radio frequency (RF) magnetic field, the reader/writer 4 or the reader/writer 6 of the host device transmits electric power to the IC card portion 8 of the IC card 1, and modulates the RF magnetic field using commands and data etc. In this way, data is transmitted by non-contact communication between the reader/writer 4 or the reader/writer 6 and the IC card portion 8. This non-contact communication is, for example, "symmetric communication" that uses the 13.56 MHz frequency bandwidth, is performed at a communication speed of 212 kbps, and does not use subcarriers. Further, for example, amplitude shift keying (ASK) can be used as a modulation method and Manchester encoding can be used as an encoding method. In addition, as an anti-collision method to detect and avoid data collision, a time slot method can be used, for example. In the present IC card system, the reader/writer 4 or the reader/writer 6 of the host device issues various commands to the IC card portion 8 of the IC card 1, and the IC card portion 8 responds to the commands. Data communication relating to a specific service is performed by repeating this transaction.

### 2. Structure of IC card (information processing device): FIG. 4 to FIG. 6

Next, the structure of the IC card 1 (a specific example of the information processing device of the present invention) that forms part of the communication system will be explained. First, the structure of the IC card portion 8 of the IC card 1 or the mobile terminal 2 according to the present embodiment will be explained with reference to FIG. 4. FIG. 4 is a block diagram showing an example of the structure of the IC card portion 8 that performs non-contact communication according to the present embodiment.

As shown in FIG. 4, the IC card portion 8 includes an antenna 10 to perform non-contact communication with a reader/writer, a transmitter 11, a receiver 12, an encryption portion 13, a decryption portion 14, a control portion 20 and a memory 30. Note that the antenna 10, the transmitter 11 and the receiver 12 are one example of a communication portion of the present invention. The encryption portion 13 and the decryption portion 14 are one example of an encryption processing portion of the present invention. The memory 30 is one example of a data storage portion and a key storage portion of the present invention. The control portion 20 and the receiver 12 are one example of an issuing information receiving portion of the present invention. The control portion 20 and the decryption portion 14 are one example of an issuing information decryption portion of the present invention. Also, the control portion 20 is one example of a mutual authentication portion and a management information issuing portion of the present invention.

The antenna 10 is an antenna to perform non-contact communication with a reader/writer. The receiver 12 demodulates data received from the reader/writer 4 or the reader/writer 6. The decryption portion 14 decrypts the received data demodulated by the receiver 12. The encryption portion 13 encrypts data to be transmitted to the reader/writer 4 or the reader/writer 6. The transmitter 11 modulates the transmission data encrypted by the encryption portion 13. The control portion 20 controls each of the portions in the IC card portion 8. The memory 30 is a memory to store data, such as user data, management information and the like.

The transmitter 11, the receiver 12, the encryption portion 13, the decryption portion 14, the control portion 20 and the memory 30 described above are, for example, formed of certain circuits and mounted on a miniature IC chip. The antenna 10 is a coil antenna or the like that is arranged along the outer edge of the IC card 1 and is connected to the transmitter 11 and the receiver 12.

The transmitter 11 and the receiver 12 (the communication portion) are, for example, formed of a modulator/demodulator circuit, a front-end circuit and a power restoration circuit etc. (not shown in the figures). The modulator/demodulator circuit modulates and demodulates data using, for example, the ASK modulation format. The power restoration circuit generates an induced electromotive force from the RF magnetic field of the carrier waves received from the reader/writer 4 or the reader/writer 6 using the antenna 10, and captures the induced electromotive force as the power source of the IC card portion 8. Further, using the antenna 10, the front-end circuit receives carrier waves transmitted by the reader/writer 4 or the reader/writer 6, demodulates the carrier waves and acquires the command or data from the reader/writer 4 or the reader/writer 6, and then delivers the command or data to the control portion 20. In addition, the front-end circuit divides the carrier waves and generates a clock to drive the IC card portion 8. Further, the front-end circuit modulates the above-described carrier waves in accordance with the command or data relating to the specific service generated by the control portion 20 and transmits the modulated carrier waves from the antenna 10 to the reader/writer 4 or the reader/writer 6.

The encryption portion 13 and the decryption portion 14 form the encryption processing portion and are formed of dedicated hardware, such as an encryption co-processor that has encryption processing functions. The encryption portion 13 and the decryption portion 14 according to the present embodiment are processors that are compatible with a plurality of different encryption algorithms (for example, DES and AES). With these processors, the IC card portion 8 of the IC card 1 or the mobile terminal 2 can perform non-contact communication with the reader/writer 4 or the reader/writer 6 using a plurality of encryption algorithms. However, in order to perform communication using the encryption algorithms with which the encryption portion 13 and the decryption portion 14 are compatible, it is necessary to store management information that is compatible with those encryption algorithms (the section definition information and the area 0 definition information to be explained later) in predetermined storage areas in the memory 30.

The control portion 20 is formed of an arithmetic processing unit such as a microprocessor, a ROM, a RAM and so on, and controls each of the portions in the IC card portion 8 at the same time as performing prescribed arithmetic processing. The control portion 20 operates in accordance with programs stored in storage media, such as the memory 30 and the ROM (not shown in the figures) and performs predetermined arithmetic processing, generates commands, and controls the transmission, receiving, reading and writing of all kinds of information. For example, when the control portion 20 performs communication relating to a specific service with a reader/writer, it reads and writes user data relating to the service in the memory 30. The control portion 20 controls the processes to encrypt and decrypt the data by the above-described encryption portion 13 and decryption portion 14. At that time, the control portion 20 also controls whether or not the encryption and decryption processing is performed, and not all the received and transmitted data is encrypted and decrypted.

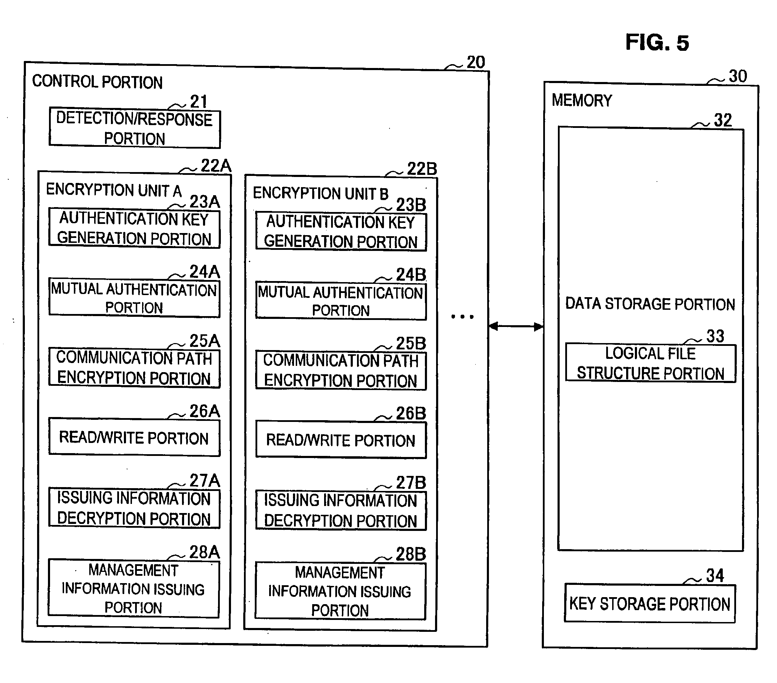

The memory 30 (the data storage portion, the key storage portion) is, for example, a semiconductor memory, such as a flash memory, an electrically erasable programmable read-only memory (EEPROM) or a ferroelectric random access memory (FeRAM). As shown in FIG. 5, the memory 30 functions as a data storage portion 32, and stores user data required to use a specific service by non-contact communication, and management information used to manage the user data. The memory 30 additionally functions as a key storage portion 34 and securely saves the authorization key required to decrypt the above-described encrypted issuing information. Note that the memory 30 can be a storage device other than a semiconductor memory, such as an HDD or the like.

Next, the structure of the control portion 20 and the memory 30 of the IC card portion 8 will be explained in detail with reference to FIG. 5. FIG. 5 is a block diagram showing an example of the structure of the control portion 20 and the memory 30 of the IC card portion 8 according to the present embodiment.

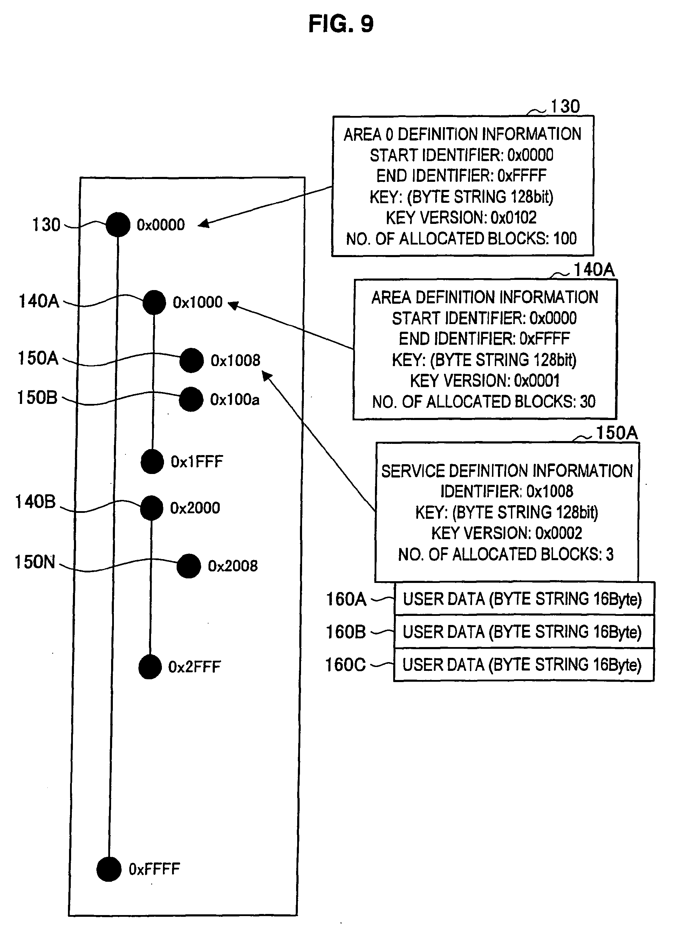

As shown in FIG. 5, the memory 30 includes the data storage portion 32 that has a logical file structure portion 33 in which management information and user data is stored in a hierarchical structure. The memory 30 also includes the key storage portion 34 that securely stores the above-described authorization key. The logical file structure portion 33 of the memory 30 has, for example, a logical file structure in which definition areas, which are management information storage areas, are logically layered in a hierarchical structure, and each type of the definition information is stored in a hierarchical format, as disclosed in the above-mentioned Japanese Patent Application Publication No. JP-A-2000-36021. The logical file structure will be described later (refer to FIG. 7 and FIG. 9 etc.).

In addition, as shown in FIG. 5, the control portion 20 includes a single detection/response portion 21 and a plurality of encryption units 22A, 22B and so on (hereinafter sometimes referred to generically as the "encryption units 22"). The encryption units 22 are established respectively for each of the encryption methods (encryption algorithms) with which the above-described encryption portion 13 and decryption portion 14 (the encryption processing portion) of the IC card portion 8 are compatible. For example, if the encryption processing portion of the IC card portion 8 is compatible with DES and AES, two of the encryption units 22 are provided, namely, the DES encryption unit 22A and the AES encryption unit 22B.

Each of the encryption units 22 includes an authentication key generation portion 23, a mutual authentication portion 24, a communication path encryption portion 25, a read/write portion 26, an issuing information decryption portion 27 and a management information issuing portion 28. In this way, each of the encryption units 22 is provided for each of the encryption methods respectively, and a plurality of the functional portions 23 to 28 required to perform communication using each of the encryption methods are provided as a set. In this way, in a case in which the IC card 1D is compatible with the plurality of encryption algorithms shown in FIG. 2, the authentication key generation portion 23, the mutual authentication portion 24, the communication path encryption portion 25, the read/write portion 26, the issuing information decryption portion 27 and the management information issuing portion 28 are different for each of the encryption algorithms.

Note that a program to execute the functions of each of the above-described portions 21 to 28 of the control portion 20 is installed in the information processing device, such as the IC card 1 or the like, and the processor that forms the control portion 20 executes the program, thus embodying each of the portions 21 to 28. The program can be delivered to the information processing device via a storage medium or a communication medium. However, it is not limited to this example, and hardware (dedicated processors, circuits etc.) with the functions of each of the portions 21 to 28 may be included in the information processing device, such as the IC card 1 or the like, to embody each of the portions 21 to 28. Each of the portions 21 to 28 of the control portion 20 will be explained below.

The detection/response portion 21 has, for example, functions that are compatible with polling commands and the like as defined by "ISO/IEC 18092." When the detection/response portion 21 receives a polling command related to a specific IC card system from the reader/writer 4 or the reader/writer 6, it generates a command response for the IC card system in response to the polling command, and returns the command response to the reader/writer 4 or the reader/writer 6. The detection/response portion 21 is provided commonly for the plurality of encryption algorithms.

The authentication key generation portion 23 generates an authentication key necessary for mutual authentication between the IC card portion 8 and the reader/writer 4 or the reader/writer 6. The authentication key can be generated, for example, using the method disclosed in the above-mentioned Japanese Patent Application Publication No. JP-A-10-327142, which will be briefly explained here. The authentication key generation portion 23 generates the authentication key using a service key of the storage area used by the service targeted for use and a unique ID allocated to each of the IC card portions 8 (hereinafter referred to as the "card ID"). When a plurality of services is used simultaneously, a degenerate key is generated from a plurality of service keys, and the authentication key is generated from the degenerate key and the card ID. Using the authentication key, mutual authentication is performed, as described below.

The mutual authentication portion 24 performs mutual authentication between the IC card portion 8 and the reader/writer 4 or the reader/writer 6. The mutual authentication can be performed, for example, using the method disclosed in Japanese Patent Application Publication No. JP-A-10-020780, or using the method defined by "ISO/IEC 9798," as briefly explained here. The mutual authentication portion 24 of the IC card 1 uses the authentication key generated by the above-described authentication key generation portion 23 to decrypt random numbers received from the reader/writer 4 or the reader/writer 6, then re-encrypts and returns them. In the IC card portion 8 also, the mutual authentication portion 24 generates random numbers, encrypts them using the authentication key and transmits them to the reader/writer 4 or the reader/writer 6. The mutual authentication portion 24 then receives a response from the reader/writer 4 or the reader/writer 6 and verifies whether the response matches the transmitted random numbers. In this way, the reader/writer 4 or the reader/writer 6 and the IC card portion 8 can perform mutual authentication by both verifying whether or not the mutually generated random numbers are correct. The mutual authentication process is performed using an encryption algorithm specified from the reader/writer 4 or the reader/writer 6. Note that the mutual authentication process will be explained in more detail later.

The communication path encryption portion 25 uses, for example, a block encryption method as described in "NIST SP 800-38" to encrypt the communication path between the IC card 1 and the reader/writer 4 or the reader/writer 6. More specifically, after the above-described mutual authentication process, the communication path encryption portion 25 uses a session key that is generated using the random numbers mutually verified by the above-described mutual authentication as a communication path encryption key to encrypt the communication path and transmit and receive all kinds of data.

The read/write portion 26 writes all kinds of data into the memory 30 or reads all kinds of data from the memory 30. For example, when a request is received from the reader/writer 4 or the reader/writer 6 to read user data for a specific service, the read/write portion 26 reads the user data from the definition area for the specific service in the data storage portion 32. When, for example, a request is received from the reader/writer 4 or the reader/writer 6 to write user data for a specific service, the read/write portion 26 writes the user data into the definition area for the specific service in the data storage portion 32. Further, the read/write portion 26 writes management information (the system definition information, the section definition information etc.) into predetermined storage areas (a system definition area, a section definition area etc.) of the data storage portion 32, the management information being issued based on issuing information that will be explained later.

The issuing information decryption portion 27 decrypts issuing information (encrypted issuing information) received by the IC card 1 from the issuing device 5 using the authorization key stored in the memory 30, and acquires the issuing information. The authorization key used in this decryption process is, for example, the authorization key (the division authorization key or the system issuing authorization key etc.) stored in the key storage portion 34 of the memory 30, or the authorization key (the system key, the area 0 key etc.) stored in the logical file structure portion 33 of the data storage portion 32. In addition, in the decryption process, the issuing information decryption portion 27 controls the decryption portion 14 and uses the above-described authorization key to perform the issuing information decryption process. At that time, the issuing information decryption portion 27 uses the authorization key that is compatible with the representative encryption algorithm (the first encryption method, AES, for example), and decrypts the issuing information using the representative encryption algorithm. Through the decryption process by the issuing information decryption portion 27, the system issuing information and the session issuing information can be securely acquired from the issuing device 5.

Based on the issuing information (the system issuing information, the section issuing information) decrypted by the issuing information decryption portion 27, the management information issuing portion 28 issues new management information (the system definition information, the section definition information etc.). The management information issuing portion 28 then stores the issued management information in a predetermined area (the system definition area, the section definition area etc.) of the logical file structure portion 33 in the data storage portion 32.

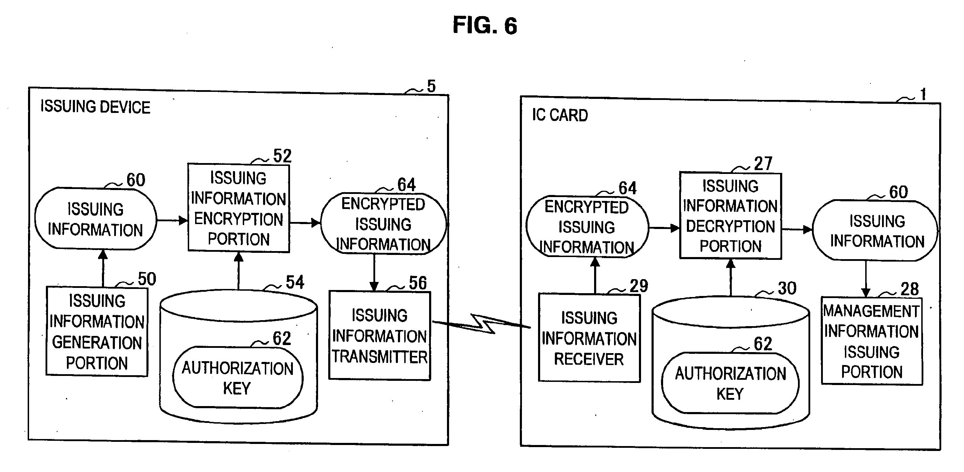

Here, encryption and decryption of the issuing information according to the present embodiment will be explained with reference to FIG. 6. FIG. 6 is a block diagram showing functions of the issuing device 5 and the IC card 1 according to the present embodiment for the encryption and decryption of the issuing information.

As shown in FIG. 6, the issuing device 5 includes an issuing information generation portion 50, an issuing information encryption portion 52, an authorization key storage portion 54 and an issuing information transmitter 56. Meanwhile, the IC card 1 includes an issuing information receiver 29, the above-described issuing information decryption portion 27 and the above-described management information issuing portion 28.

The issuing information generation portion 50 of the issuing device 5 generates issuing information 60, such as the system issuing information or the section issuing information and the like. The system issuing information is information used to issue the system definition information in the IC card 1 that is compatible with a new IC card system. The section issuing information is information used to issue the section definition information in the IC card 1 that is compatible with a new encryption algorithm. The issuing information generation portion 50 includes, as management information, all kinds of definition information (key, key version, codes, identifiers etc.) stored in the logical file structure portion 33 of the IC card 1, and check code data used to verify integrity. The issuing information generation portion 50 sets the above-described definition information based on user input or existing setup conditions, and generates the issuing information 60.

The issuing information encryption portion 52 uses an authorization key 62 that is securely stored in the authorization key storage portion 54 to encrypt the issuing information 60 and generate encrypted issuing information 64. The encryption process is performed using a predetermined encryption algorithm, for example, the representative encryption algorithm (the first encryption method, AES, for example). The issuing information transmitter 56 transmits the encrypted issuing information 64, generated in the above-described way, to the information processing device, such as the IC card 1 or the mobile terminal 2, by either non-contact communication via the reader/writer 6 shown in FIG. 1, or via the network 7.

The issuing information receiver 29 of the IC card 1 receives the encrypted issuing information 64 transmitted from the issuing device 5. When the IC card 1 receives the encrypted issuing information 64 from the reader/writer 6 of the issuing device 5 by non-contact communication, the issuing information receiver 29 is formed of, for example, the antenna 10 and the receiver 12 and so on of the IC card portion 8, as shown in FIG. 3. When the mobile terminal 2 receives the encrypted issuing information 64 from the issuing device 5 via the network 7, the issuing information receiver 29 is formed of, for example, a network communication device with which the mobile terminal 2 is normally equipped.

The issuing information decryption portion 27 uses the authorization key 62 stored in advance in the memory 30 to decrypt the above-described encrypted issuing information 64 received from the issuing device 5, and thus acquires the issuing information 60. The same authorization key 62 is stored in advance in the memory 30 of the IC card 1 and the key storage portion 54 of the issuing device 5. Further, based on the decrypted issuing information 60, the management information issuing portion 28 of the IC card 1 creates the system definition information, the section definition information and the area 0 definition information etc., which is management information. The information management issuing portion 28 uses the read/write portion 26 to register the created definition information and user data to the relevant storage areas in the logical file structure portion 33.

Here, the authorization key 62 shown in FIG. 6 will be explained. The "authorization key 62" is a generic term for the key used to encrypt and decrypt the issuing information 60. The authorization key 62 is, for example, the "system key," the "area 0 key," the "system issuing authorization key" or the "division authorization key" and so on.

The "system key" is a key necessary to access the definition areas for each of the IC card systems on the IC card 1. The system key is issued for each encryption algorithm of the IC card system, and is included in section definition information 120 in the logical file structure portion 33 (refer to FIG. 7).

The "area 0 key" is a key necessary to access each IC card system area 0 definition area. The area 0 key is issued for each encryption algorithm for each IC card system, and is included in area 0 definition information 130 in the logical file structure portion 33 (refer to FIG. 7).

The "division authorization key" is a key that indicates authority to create a plurality of logic IC cards on the single physical IC card 1. The authority to create the logic IC cards is held, for example, by the company that supplies the basic technology for each type of IC card system.

The "system issuing authorization key" is a key that indicates authority held by the issuer of the IC card 1, and is, for example, a key that indicates user block allocation authority in relation to each of the IC card systems on the IC card 1. More specifically, for example, when the IC card 1 can be used at a specified convenience store, the company that manages the specified convenience store is the system issuing authority. Further, when it is a mobile card, such as a mobile telephone containing the IC card portion 8, the mobile telephone carrier is the system issuing authority. If the user blocks (the number of allocated blocks) in the IC card 1 are all the possession of the issuer, the issuer has the authority to allocate the number of user blocks in relation to each IC card system (the number of blocks allocated to area 0).

The above-described system key and area 0 key are the authorization keys necessary to issue the section definition area and the section definition information of the logical file structure portion 33. Meanwhile, the division authorization key and the system issuing authorization key are the authorization keys necessary to issue the system definition area and the system definition information of the logical file structure portion 33.

The authorization key 62 is stored securely in the IC card 1, sometimes stored in a storage area separate from the logical file structure portion 33 and sometimes stored within the logical file structure portion 33. In the present embodiment, for example, the above-described "system key" and "area 0 key" are stored in the logical file structure portion 33 of the data storage portion 32 in the IC card 1, and the "system issuing authorization key" and the "division authorization key" are stored in the key storage portion 34. In the case of the IC card 1, it is only necessary to have the division authorization key alone, and the system issuing authorization key is not necessary. In this case, the division authorization key is stored separately from the logical file structure portion 33 in the secure key storage portion 34 in the IC card 1. On the other hand, in the case of the mobile terminal 2, both the division authorization key and the system issuing authorization key are necessary, and both the keys are stored in the logical file structure portion 33.

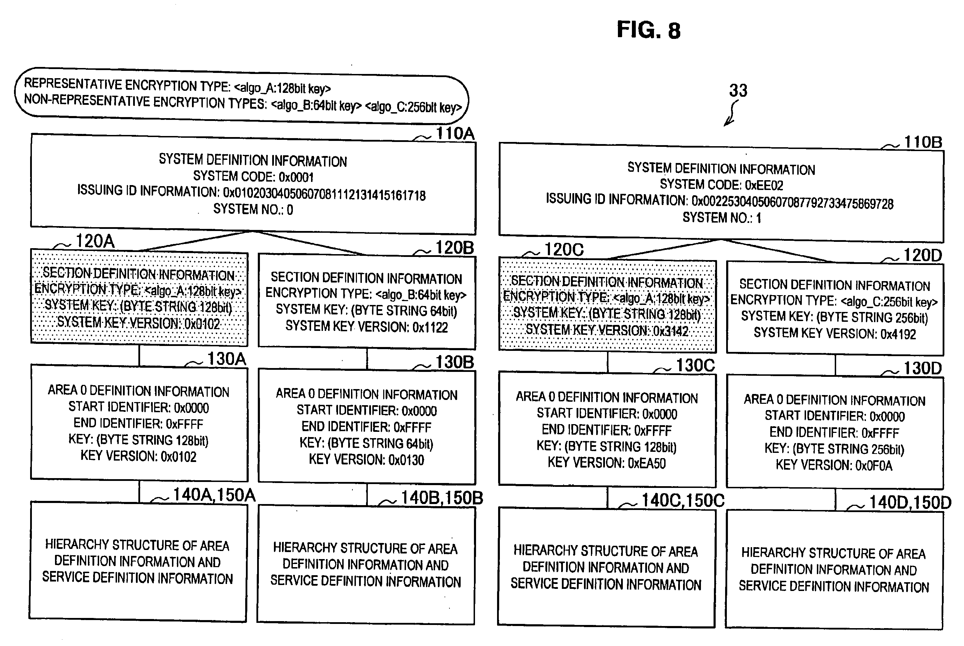

3. Logical file structure of IC card: FIG. 7 to FIG. 11 Next, the logical file structure for management information and user data stored in the memory 30 of the IC card 1 according to the present embodiment will be explained with reference to FIG. 7 to FIG. 11. FIG. 7 is a pattern diagram showing the logical file structure portion 33 of the memory 30 of the IC card 1 according to the present embodiment. Note that the notation in FIG. 7 uses a "UML 2.0" class diagram. Further, FIG. 8 is a pattern diagram showing a specific example of the logical file structure portion 33 according to the present embodiment, and FIG. 9 is a pattern diagram showing a specific example of the hierarchical structure of the area definition information 130 and 140 and the service definition information 150 according to the present embodiment. Note that in the following explanation, the example of the information processing device equipped with the IC card portion 8 is the IC card 1, but the explanation is the same for the mobile terminal 2.

The data storage area 32 of the memory 30 has the logical file structural portion 33 that stores user data and management information. When the usage data of the IC card portion 8 that has a plurality of the encryption units 22 that are different for each of the encryption algorithms shown in FIG. 5 is grouped together as one, it is preferable to have the data structure of the logical file structural portion 33 shown in FIG. 7.

As shown in FIG. 7, in the logical file structure portion 33, the storage areas used to store user data and management information (all the types of definition information) have a hierarchical structure. In more detail, the storage area of the data storage portion 32 is formed of the system definition area that stores system definition information 110, the section definition area that stores the section definition information 120, the area 0 definition area that stores the area 0 definition information 130, an area definition area that stores the area definition information 140 (notated as the "area N definition information" in FIG. 7), a service definition area that stores the service definition information 150 and a user data area that stores user data 160, organized hierarchically in that order. In other words, management information to manage user data has a hierarchical structure in which the highest level is the system definition information 110, the section definition information 120 is lower than and subordinate to the system definition information 110, the area 0 definition information 130 is lower than and subordinate to the section definition information 120, the area definition information 140 is lower than and subordinate to the area 0 definition information 130, and the service definition information 150 is the lowest level.

One, or two or more, of the section definition information 120 are established subordinate to the system definition information 110 for each encryption algorithm (the system / section ratio is 1/more than one). A single one of the area 0 definition information 130 is established subordinate to the section definition information 120 (the section/area 0 ratio is 1/1). One, or two or more, of the area definition information 140 are established subordinate to the area 0 definition information 130 (the area 0/area ratio is 1/more than one). One, or two or more, of the service definition information 150 are established subordinate to the area definition information 140 (the area/service ratio is 1/more than 1). One, or two or more, user data are established subordinate to the service definition information 150 (the service/user data ratio is 1/more than 1). The definition information are management information necessary to define the definition area (storage area) of each layer in the hierarchy. A feature of the logical file structure portion 33 according to the present embodiment is that, subordinate to the system definition information 110, a plurality of the section definition information 120 and the area 0 definition information 130 are established, divided for each encryption algorithm. Each of the definition information will be explained below.

### (a) System definition information

The system definition information 110 is information to define IC card systems with which the IC card 1 is compatible. The IC card system corresponds to the non-contact communication system of the present invention. The system definition information 110 includes a uniquely allocated system code for each IC card system, issuing ID information that is a value that can be freely set by the IC card system administrator, and system numbers that are sequentially assigned to the IC card systems located in the IC card 1.

The system definition information 110 is defined for each IC card system that is located in the IC card 1, and stored in different storage areas (namely, the system definition areas). It is possible for the single IC card 1 to have a plurality of the system definition information 110, and this is equal to arranging a plurality of logic cards in the single IC card 1. System numbers are sequentially assigned to the registration of the system definition information 110 on the IC card 1. In other words, each time the new system definition information 110 is newly issued in the IC card 1, a new system number is assigned to the system definition information 110. As shown in FIG. 8, the IC card system of system definition information 110A assigned the system number "0" has special authority to issue system definition information 110B for the IC card system with the system number "1" or above. Using these system numbers, it is possible to distinguish between the IC card system with the special authority (the system number "0") and the other IC card systems (the system numbers "1" and above).

The system code is a code that is uniquely assigned to each IC card system, and indicates the service being delivered by the IC card system. The reader/writer 4 or the reader/writer 6 uses the system code to capture the IC card 1. For example, a polling command as described by "ISO/IEC 18092" can be used as the system code. If the reader/writer 4 or the reader/writer 6 transmits a polling command that includes the system code and performs polling, when the IC card 1 that has the system code is passed over the reader/writer 4 or the reader/writer 6, the IC card 1 responds.

In this way, the following merits are obtained. For example, when a service providing company that delivers a service using the IC card 1 changes the encryption algorithm from A to B and then to C, the reader/writer 4 of the service providing company device 3 must be compatible with all the encryption algorithms A to C. In this situation, by using the IC card 1 with the above-described data structure, the reader/writer 4 or the reader/writer 6 can use the same polling command to capture all the IC cards 1A to 1D that are compatible with the three encryption algorithms A to C.

### (b) Section definition information

The section definition information 120 is definition information that is a feature of the logical file structure portion 33 according to the present embodiment. The section definition information 120 is information to define the encryption algorithm or algorithms with which the IC card 1 is compatible. The section definition information 120 stores identification information that indicates the encryption methods with which the IC card 1 is compatible (an identifier that indicates an encryption type), the system key used to access storage areas subordinate to the section definition information 120, and the system key version.

The encryption type identifier is a unique value that is assigned in advance to each encryption algorithm and is, for example, a first encryption method (AES, for example) identifier, a second encryption method (DES, for example) identifier and so on. By including the encryption type identifier in the section definition information 120, it is possible to determine which encryption type the IC card 1 is compatible with.

For the system key, a different value is used for each encryption algorithm. In the example shown in FIG. 8, a 128 bit key is used as the key for the encryption algorithm A (AES, for example), and a 64 bit key is used as the key for the encryption algorithm B (DES, for example). The system key version indicates the version of the system key, and is updated as necessary. By saving the system key compatible with a given encryption algorithm and its version, the IC card 1 can perform data communication with the reader/writer 4 or the reader/writer 6 using that encryption algorithm.

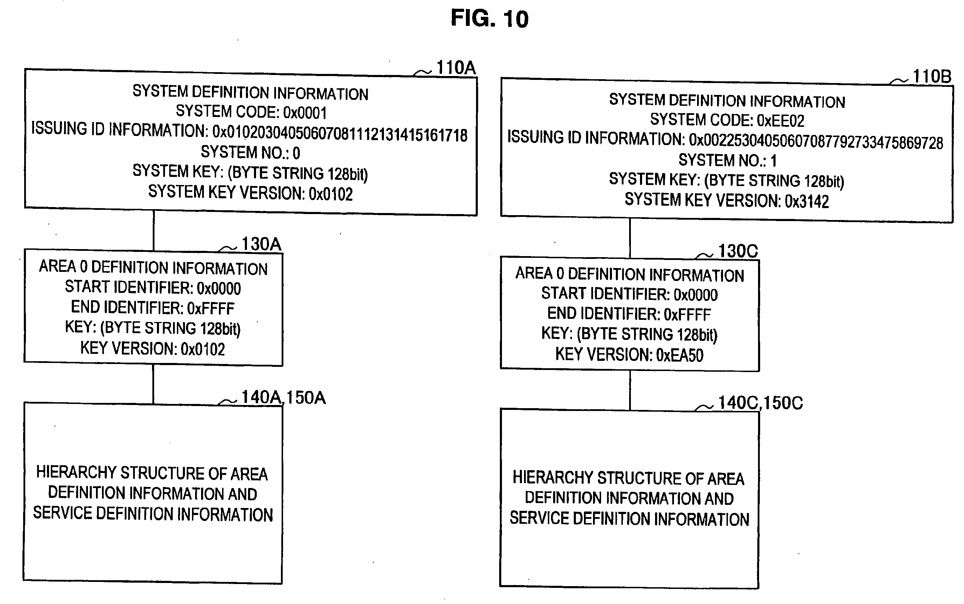

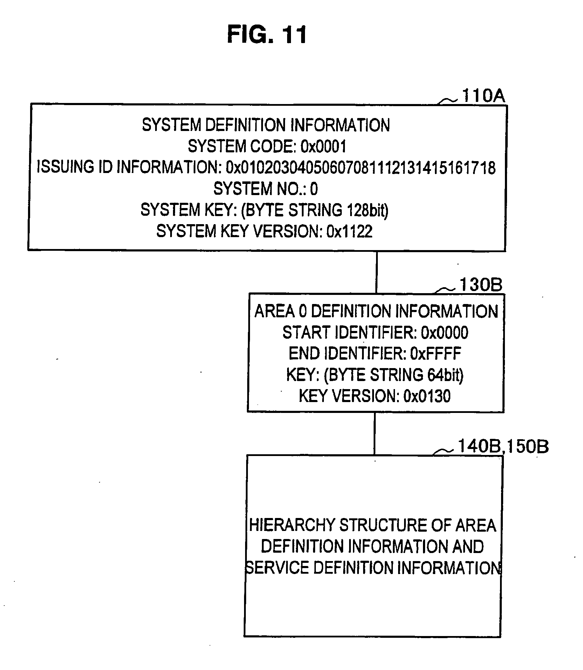

The section definition information 120 is lower than and subordinate to the system definition information 110, and is provided for each encryption algorithm with which the IC card 1 is compatible. In known art, as shown in FIG. 10 and FIG. 11, the area 0 definition information 130 is established directly below the system definition information 110, and the section definition information 120 is not provided. In contrast, in the present embodiment, as shown in FIG. 8, a plurality of the section definition information 120 can be established for each encryption algorithm (encryption method) subordinate to a single one of the system definition information 110, and the area 0 definition information 130 is established subordinate to each of the section definition information 120 in a one to one ratio. Further, in known art, as shown in FIG. 10 and FIG. 11, the system definition information 110 stores the system key and the system key version. In contrast, in the present embodiment, as shown in FIG. 8, to set the system key for each encryption type, the system key and the system key version are stored in the section definition information 120 established for each encryption algorithm.

The above-described section definition information 120 will be explained in more detail later. As shown in FIG. 8, it is possible to set a plurality of section definition information 120A, 120B (or 120C, 120D) that are compatible, respectively, with each of a plurality of encryption algorithms such that they are subordinate to the system definition information 110A (or 110B) relating to a given single IC card system. For example, if the IC card 1 is compatible with both the DES and AES encryption methods, the DES section definition information 120A and the AES section definition information 120B can be located within the single system definition area. This is equal to storing a plurality of IC cards that are compatible with a plurality of encryption algorithms within a single logic IC card. Using this data structure with the section definition information 120, the reader/writer 4 or the reader/writer 6 can use the same polling command to capture the IC card 1 that has a plurality of encryption algorithms. For example, if the same system code is stored in the system definition information 110 of the IC cards 1A, 1B and 1C that are compatible, respectively, with the encryption algorithms A, B and C shown in FIG. 2 and also the IC card 1D that is compatible with the encryption algorithms A, B and C, the reader/writer 4 or the reader/writer 6 can capture all the IC cards 1A to 1D using the same polling command.

In addition, from among the plurality of encryption methods (encryption algorithms) with which the IC card 1 encryption processing portion is compatible, a specified single encryption method is used in processes (a system issuing process or a section issuing process) to issue management information using issuing information that will be explained later. In the explanation below, the specified single encryption method is referred to as the "representative encryption method (or representative encryption type, or representative encryption algorithm)" and the section definition information 120 and the subordinate definition information corresponding to the representative encryption method are referred to as the "representative section." Further, from among the above-described plurality of encryption methods, one, or two or more, encryption methods apart from the representative encryption method are generically referred to as "non-representative encryption methods" and the section definition information 120 and the subordinate definition information corresponding to the non-representative encryption methods are referred to as the "non-representative section." For example, in FIG. 8, the encryption algorithm A (<algo_A:128 bit key>) is the representative encryption method and the other encryption algorithms B and C (<algo_B:64 bit key>, <algo_C:256 bit key>) are the non-representative encryption methods. The section definition information 120A, the section definition information 120C, the area 0 definition information 130A and the area 0 definition information 130C corresponding to the encryption algorithm A are the representative section. The section definition information 120B, the section definition information 120D, the area 0 definition information 130B and the area 0 definition information 130D corresponding to the encryption algorithms B and C are the non-representative section.

### (c) Area 0 definition information, area definition information, service definition information

Subordinate to the above-described section definition information 120 is the single area 0 definition information 130. In other words, the area 0 definition information 130 corresponds to the higher layer section definition information 120 in a one to one ratio. Further, subordinate to the area 0 definition information 130 is one, or two or more, of the area definition information 140. The area 0 definition information 130 and the area definition information 140 are information to define the area of the storage areas of the IC card 1. In addition, subordinate to each of the area definition information 140 is one, or two or more, of the service definition information 150. The service definition information 150 is information to define the storage area used for a service in each area. The data structure used for the area 0 definition information 130, the area definition information 140 and the service definition information 150 is the data structure disclosed, for example, in Japanese Patent Application Publication No. JP-A-2000-36021.

The area 0 definition information 130 is a type of area definition information, and in terms of the hierarchical structure, it is equal to the highest folder. The area definition information 140 apart from the area 0 definition information 130 is notated as the area N definition information on FIG. 7. As shown by the reference numeral 132 in FIG. 7, the area 0 definition information 130 and the area definition information 140 store a start identifier and an end identifier that indicate the scope of the relevant area definition area (the storage area) as identification codes. The hierarchical structure is determined by the identification codes. In addition, the area 0 definition information 130 and the area definition information 140 store a key, the key version and a number of allocated blocks. The key stored in the area 0 definition information 130 and the area definition information 140 is a key necessary to access the area definition area defined by the area 0 definition information 130 and the area definition information 140. The number of allocated blocks is the number of storage area blocks allocated to the area definition area.

In the same way, the service definition information 150 stores a start identifier and an end identifier (identification codes) that indicate the scope of the service definition area (the storage area), a key, a key version and a number of allocated blocks. One, or two or more, of the user data 160, which are used in the relevant service, are stored subordinate to the service definition area. The method of access to the user data 160 is managed by the service definition information 150 identification code. Seen from the user data 160, a plurality of the service definition information 150 can be linked, and it is therefore possible to define a plurality of access methods with regard to a given one of the user data 160. For example, it is possible to perform access management in such a way that "user data can be read out without performing mutual authentication, but user data cannot be written without performing mutual authentication" and the like. There are a variety of services that use the IC card 1, some of which allow reading and writing of user data, and some of which are cyclic services etc. which are a kind of history management. The service definition information 150 defines the access method when using each service and defines the number of user blocks that can be used by each service and so on.

FIG. 9 shows a specific example of the area 0 definition information 130, the area definition information 140 and the service definition information 150. Note that, FIG. 9 shows the hierarchical structure below the section definition information 120 with the encryption type <algo_A:128 bit key> that is subordinate to the system definition information 110 with the system code "0x0001," as shown in FIG. 8.

As shown in FIG. 9, two area definition information 140A and 140B belong to the area 0 definition information 130. Two service definition information 150A and 150B belong to the area definition information 140A, and one service definition information 150N belongs to the area definition information 140B. In addition, a plurality of user data 160A to 160C belong to the service definition information 150A. In this way, the area 0 definition information 130, the area definition information 140, the service definition information 150 and the user data 160 have the hierarchical structure in the above-described order. With this structure, the area definition area can be set for each service providing company and the service definition area can be set for each service delivered by the service providing company, thus allowing efficient management of user data for all types of service providing company and service on the single IC card 1.

Here, specific examples of the above-described definition information 110 to 150 that match the business type using the IC card 1 will be explained. As described above, the system definition information 110 is issued for each IC card system, and the section definition information 120 is issued for each encryption algorithm (encryption method). Further, the area definition information 140 is issued for each service providing company that uses the IC card 1, and the service definition information 150 is issued for each service delivered by the service providing company.

### First business type

A first business type is a case in which a single service providing company (a railway corporation, for example) exclusively holds all the system definition area storage areas corresponding to a single IC card system (a transport ticket IC card system) as its own. In this case, the storage areas (the section, area 0, area and service definition areas) subordinate to the system definition area are all used by the service delivered by the service providing company. In this case, it is assumed that the reader/writer 4 (an automatic ticket barrier, for example) of the service providing company's service providing company device 3 is only compatible, for example, with the former encryption algorithm A (DES, for example), and the IC card 1, as shown in FIG. 8, is compatible with two encryption algorithms, both former and new (DES and AES, for example). In this case, initially, the DES section definition information 120B subordinate to the system definition information 110A is used, and use of the area/service definition areas is continued, as before, using DES. Next, at a certain point in time, the DES section definition information 120B is deleted from the data storage area 32 of the IC card 1, and only the AES section definition information 120A remains. After that, the AES section definition information 120A is used to continue the service with the area/service definition areas using AES. When the encryption method is switched in this way, it is not assumed that two of the section definition information 120 compatible with the two encryption methods A and B are simultaneously existent in a single one of the IC card 1. The first business type is a case in which a single encryption method is selected from two options and the encryption algorithm is therefore completely switched.

### (2) Second business type

A second business type is a case in which, within a same IC card system, the area definition areas are divided in units of service providing company. In the second business type, a service providing company α that issues the IC card 1 (the issuer) can loan a plurality of the area definition areas in the IC card 1 to other service providing companies β, γ and θ and the plurality of service providing companies β, γ and θ share the single IC card 1. In this case, it is assumed that a plurality of the section definition information 120 corresponding to the encryption methods A and B are simultaneously existent in the single IC card 1. For example, when the service providing companies β and γ use the new encryption method A (AES) and the service providing company θ uses the old encryption method B (DES), the AES section definition information 120A and the DES section definition information 120B, which are subordinate to the system definition information 110A, exist simultaneously, as shown in FIG. 8. With this structure, the single IC card 1 can be shared by services using a plurality of encryption types.

The logical file structure portion 33 of the IC card 1D that is compatible with the plurality of encryption methods A, B and C according to the present embodiment is explained above. Here, examples of logical file structure portions of the IC card 1 that is only compatible with a single encryption algorithm will be explained with reference to FIG. 10 and FIG. 11. FIG. 10 is an example of a logical file structure portion of the known IC card 1A that is only compatible with the single encryption algorithm A. FIG. 11 is an example of a logical file structure portion of the known IC card 1B that is only compatible with the single encryption algorithm B.

As shown in FIG. 10 and FIG. 11, the IC card 1 that is only compatible with the single encryption algorithm A or B does not require the section definition information 120 shown in FIG. 7 and FIG. 8. The system key and the key version, which are stored in the section definition information 120 shown in FIG. 7 and FIG. 8, are stored in the system definition information 110 in the example shown in FIG. 10 and FIG. 11 and the encryption type identifiers are not stored.

### 4. Use of IC card: FIG. 12 to FIG. 19

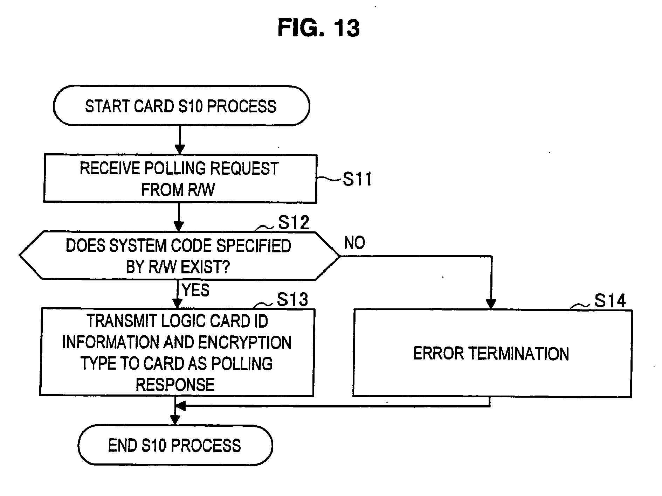

Next, the process for using the IC card 1 according to the present embodiment will be explained with reference to FIG. 12 to FIG. 19. FIG. 12 is a sequence diagram showing an access sequence between the IC card 1 and the reader/writer 4 of the service providing company device 3 according to the present embodiment, when the IC card 1 is being used. FIG. 13 to FIG. 19 are flow charts respectively showing processes S10, S20, S30, S40, S50, S60 and S70 with respect to FIG. 12.

Use of the IC card 1 refers to the process in which, by passing the IC card 1 within the communication range of the reader/writer 4 of the service providing company device 3, the IC card 1 and the service providing company device 3 can transmit and receive predetermined data, and a specific service is delivered to a user using non-contact communication. When the IC card 1 is used, as explained in more detail below, after the reader/writer 4 has captured the IC card 1 using polling (step S1 to step S10), the reader/writer 4 and the IC card 1 perform mutual authentication and encrypt a communication path (step S20 to step S50). After that, the reader/writer 4 and the IC card 1 exchange predetermined commands and data relating to the service (step S60 to step S70).

More specifically, as shown in FIG. 12, first the reader/writer 4, in order to capture the IC card 1, continuously transmits a polling request that specifies a system code "0x0001," thus polling the IC card 1 (step S1). By placing the IC card 1 that is compatible with the IC card system with the above system code within the communication range of the reader/writer 4, the IC card 1 receives the above polling request and transmits a polling response to the reader/writer 4 (step S10).

Next, when the reader/writer 4 receives the polling response from the IC card 1, it creates an authentication message 1 request and transmits the request to the IC card 1 (step S20). The authentication message 1 request specifies an identifier for the encryption algorithm A to be used, and a service identification code "1008". When the IC card 1 receives the authentication message 1 request from the reader/writer 4, it creates an authentication message 1 response and sends the response to the reader/writer 4 (step S30).

Further, when the reader/writer 4 receives the authentication message 1 response from the IC card 1, it creates an authentication message 2 request using the encryption algorithm A and transmits the request to the IC card 1 (step S40). When the IC card 1 receives the authentication message 2 request from the reader/writer 4, it creates an authentication message 2 response and transmits the response to the reader/writer 4 (step S50). As a result, mutual authentication between the reader/writer 4 and the IC card 1 is completed, and a session key is generated to encrypt the communication path between the reader/writer 4 and the IC card 1.

After that, the reader/writer 4 uses the above-described session key to encrypt a predetermined command necessary to use the service (a data read request, for example) and transmits the request to the IC card 1 (step S60). When the IC card 1 receives the data read request from the reader/writer 4, it uses the above-described session key to decrypt the encrypted data read request, and reads the user data specified in the data read request from the memory 30. Then, the IC card 1 encrypts the read user data using the above-described session key and transmits the encrypted user data to the reader/writer 4 (step S70).

Next, the above-described processes step S10 to step S70 of FIG. 12 will be explained in more detail with reference to FIG. 13 to FIG. 19.

First, the IC card 1 polling response process (the process at step S10 in FIG. 12) will be explained with reference to FIG. 13.

As shown in FIG. 13, when the IC card 1 is passed over the reader/writer 4 of the service providing company device 3, the IC card 1 receives a polling request from the reader/writer 4 (step S11). Next, the IC card 1 determines whether or not the system definition information 110 that stores the system code "0x0001" specified by the polling request exists in the logical file structure portion 33 (step S12). The IC card 1 stores the system definition information 110 for one, or two or more IC card systems with which the IC card 1 is compatible in the logical file structure portion 33, and the system definition information 110 includes the system codes indicating the IC card systems.

As a result of the above determination process, if the system definition information 110 corresponding to the system code does not exist, the process performs an error termination and does not respond to the reader/writer 4 (step S14). On the other hand, if the system definition information 110 corresponding to the system code does exist, the IC card 1 is compatible with the IC card system with the specified system code. In this case, in order to respond to the polling request from the reader/writer 4, the IC card 1 returns logic card identification information to the reader/writer 4 as a polling response (step S13). The logic card identification information is information that includes the system number contained in the system definition information 110 of the specified system code, and the IC card 1 identification information (card ID). In addition, at step S13, the IC card 1 also returns to the reader/writer 4, as the polling response, identification information that indicates the encryption type of the IC card system with which the IC card 1 is compatible (hereinafter referred to as the "encryption type ID"). By doing this, the IC card 1 notifies the reader/writer 4 of the encryption type of the IC card system with which the IC card 1 itself is compatible. The IC card 1 refers to the logical file structure portion 33 and checks the encryption type identifier that is contained in the section definition information 120 subordinate to the system definition information 110 for the above-described specified system code, and can thus determine the encryption type with which the IC card 1 is compatible.

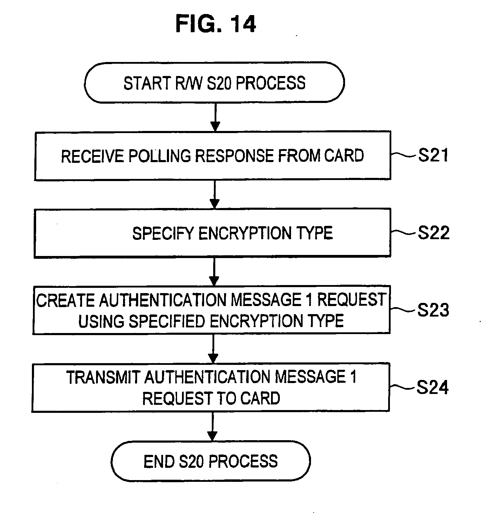

Next, the authentication message 1 request process by the reader/writer 4 (the process at step S20 in FIG. 12) will be explained with reference to FIG. 14.

As shown in FIG. 14, first, the reader/writer 4 receives the above-described polling response from the IC card 1 (including the logic card identification information and the encryption type ID) (step S21). Next, the reader/writer 4, based on the encryption type ID contained in the polling response, specifies the encryption type to be used in a subsequent authentication process (step S22). For example, when the IC card 1 is only compatible with a single encryption algorithm (DES, for example), the reader/writer 4 specifies the DES encryption algorithm as the encryption type to be used in the subsequent authentication process. When the IC card 1 is compatible with a plurality of encryption algorithms (both AES and DES, for example), the reader/writer 4 selects the encryption type in accordance with appropriate selection conditions, such as selecting the encryption type with which the reader/writer 4 itself is compatible, or selecting the more reliable encryption type.

Note that the example here describes a case in which the reader/writer 4 determines the encryption type with which the IC card 1 is compatible by the IC card 1 returning the encryption type with which it is compatible to the reader/writer 4 as the polling response. However, the method for the reader/writer 4 to determine the encryption type is not limited to this example, and may be, for example, method (1) or method (2) described below.

(1) An IC code that is unique to the IC chip on the IC card 1 is included in the polling response, and the reader/writer 4 can use the IC code to determine which encryption type the responding IC card 1 is compatible with.

(2) Alternatively, when the reader/writer 4 has been switched from an old encryption method (DES) to a new encryption method (AES), when it can be determined that all the IC cards 1 have been switched to AES, it is not necessary to determine the encryption type. However, it is not realistic to completely switch over the encryption method of all of the IC cards 1 relating to an existing specific service. Here, an option request may be added to the polling request from the reader/writer 4, such that, if the IC card 1 uses the old encryption method, it does not reply to the option request but if the IC card 1 uses the new encryption method, it returns a message in response to the option request. In this way, the reader/writer 4 can determine the encryption type with which the IC card 1 is compatible based on the presence or lack of response to the option request.

Returning to FIG. 14, next, the reader/writer 4 creates the authentication message 1 request using the encryption algorithm specified at step S22 (step S23) and transmits the authentication message 1 request to the IC card 1 (step S24). The authentication message 1 request includes a first set of random numbers that are encrypted by the above-described specified encryption algorithm using the authentication key. When creating the authentication message 1 request at step S23, the reader/writer 4 generates the first set of random numbers and also creates the authentication key to perform mutual authentication, and uses the authentication key to encrypt the first set of random numbers.

As described above, the authentication key is generated from a service key used in the service targeted for use and from the card ID of the IC card 1. Using the authentication key, it is possible to identify the service and the card to be used. When using a plurality of services simultaneously, a degenerate key is created from a plurality of the service keys, and the authentication key is generated from the degenerate key and the card ID. For example, sometimes, when the single IC card 1 is passed over the reader/writer 4, as well as reducing the remaining balance (value) on the card for the transport ticket service and electronic money service, a history management service is used to write a usage history of the value (when, where and how much was used etc.) onto the card. When a plurality of services is used in this way, the degenerate key is generated as a key that combines a plurality of the service keys.

Further, the above-described authentication message 1 request specifies the encryption algorithm to be used in the subsequent authentication process (the identifier indicating the encryption type of the specified encryption algorithm), and also specifies the service to be used (the identification code for the specified service). In the example shown in FIG. 12, the authentication message 1 request includes the identifier <algo_A> that identifies the specified encryption algorithm A, and the identification code "1008" that identifies the specified service. Note that a plurality of services to be used simultaneously can be specified using the authentication message 1 request. By receiving the authentication message 1 request, the IC card 1 can ascertain the encryption type to be used in the subsequent processing, and the service to be used.

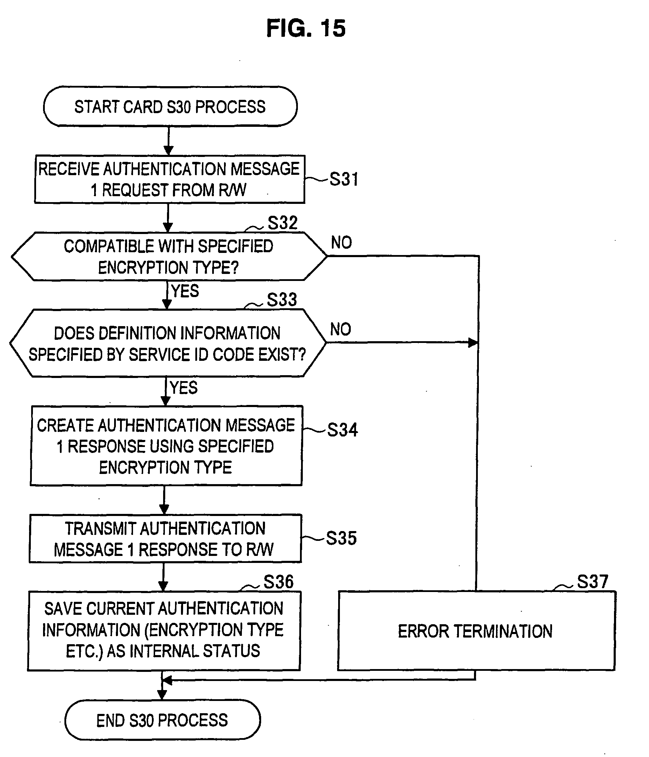

Next, an authentication message 1 response process by the IC card 1 (the process at step S30 in FIG. 12) will be explained with reference to FIG. 15.

As shown in FIG. 15, first, the IC card 1 receives the authentication message 1 request from the reader/writer 4 (step S31). When the authentication message 1 request is received, the IC card 1 extracts, from the authentication message 1 request, the identifier for the encryption type specified by the reader/writer 4, and the identification code for the service specified by the reader/writer 4.

Next, by matching the encryption type identifier contained in the section definition information 120 in the logical file structure portion 33 with the identifier of the specified encryption type, the IC card 1 determines whether or not the IC card 1 itself is compatible with the specified encryption type (step S32). In addition, the IC card 1 determines whether or not the logical file structure portion 33 of the IC card 1 itself includes the service definition information 150 of the identification code for the specified service (step S33). When the IC card 1 is compatible with the specified encryption type and the service definition information 150 of the service code for the specified service is contained in the logical file structure portion 33, the process advances to step S34. In any other case, the process performs an error termination (step S37).

Next, at step S34, the IC card 1 uses the encryption type specified by the reader/writer 4 to create an authentication message 1 response (step S34). More specifically, the authentication key generation portion 23 of the IC card 1, in the same way as the reader/writer 4, creates the authentication key to perform mutual authentication using the service key used for the service specified by the reader/writer 4 (the service definition information 150 key), and the card ID of the IC card 1. When a plurality of services are being used simultaneously, a degenerate key is generated from a plurality of the service keys, and the authentication key is generated from the degenerate key and the card ID. Then, the mutual authentication portion 24 uses the above-described generated authentication key generated with the above-described specified encryption algorithm to decrypt the first set of random numbers contained in the authentication message 1 request received from the reader/writer 4, and then once more encrypts the first set of random numbers using the authentication key. In addition, the mutual authentication portion 24 of the IC card 1 newly generates a second set of random numbers, and encrypts the second set of random numbers using the above-described authentication key generated with the above-described specified encryption algorithm. Then, the mutual authentication portion 24 creates the authentication message 1 response that contains the first set of random numbers encrypted with the above-described authentication key, and the second set of random numbers encrypted with the above-described authentication key, and returns the authentication message 1 response to the reader/writer 4 (step S35).

After that, as the IC card 1 internal status, the mutual authentication portion 24 of the IC card 1 stores the logic card identification information specified by the reader/writer 4 (the system number and the card ID) and the identification codes for the encryption type and the service in a storage portion such as the memory 30 (step S36). Hereinafter, the logic card identification information and the encryption type and service identification codes are referred to as "current authentication information." The current authentication information is identification information indicating the encryption type and the service specified by the reader/writer 4.

Note that, for example, when the power source to the IC card 1 is interrupted, or when the IC card 1 receives a reset command from the reader/writer 4, the stored specified current authentication information is deleted. When changing a service delivered between the IC card 1 and the reader/writer 4, the IC card 1 receives a reset command from the reader/writer 4 to reset already stored content.

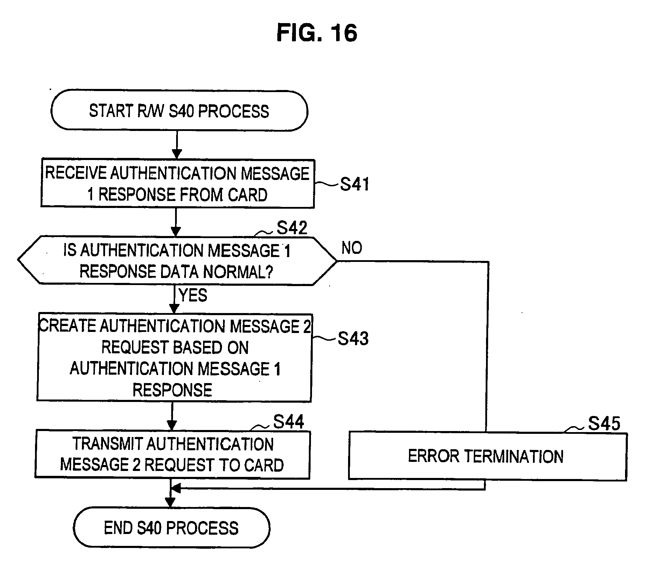

Next, an authentication message 2 request process by the reader/writer 4 (the process at step S40 in FIG. 12) will be explained with reference to FIG. 16.

As shown in FIG. 16, the reader/writer 4 first receives the above-described authentication message 1 response (the re-encrypted first set of random numbers and the encrypted second set of random numbers) from the IC card 1 (step S41). Next, the reader/writer 4 determines whether or not the received authentication message 1 response is normal (step S42). If it is normal, the process advances to step S43, and if it is not normal, the process performs an error termination (step S45). In the process to determine whether or not the data is normal, the reader/writer 4 decrypts the first set of random numbers that were re-encrypted by the IC card 1, and if the decrypted first set of random numbers matches the first set of random numbers initially generated by the reader/writer 4, the data is determined to be normal.

Next, at step S43, the reader/writer 4, based on the authentication message 1 response, creates data to be contained in the authentication message 2 request (step S43). More specifically, the reader/writer 4 uses the above-described authentication key generated at step S23 with the above-described specified encryption algorithm to decrypt the second set of random numbers contained in the authentication message 1 response received from the IC card 1, and then once more encrypts the second set of random numbers using the authentication key. Then, the reader/writer 4 creates the authentication message 2 request that contains the re-encrypted second set of random numbers. Next, the reader/writer 4 transmits the created authentication message 2 request to the IC card 1 along with the above-described specified logic card identification information and the encryption type (step S44).

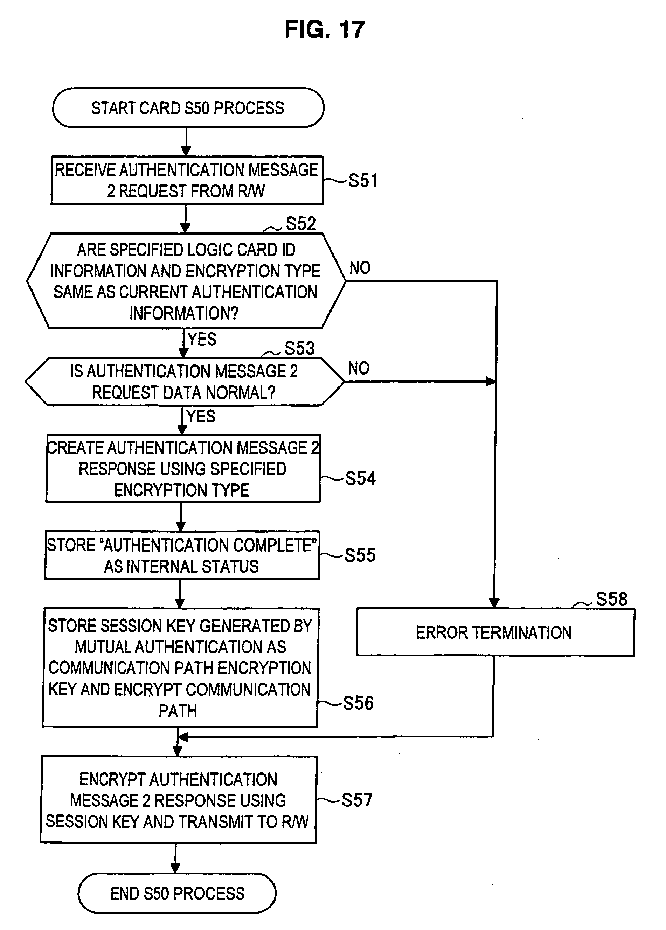

Next, an authentication message 2 response process by the IC card 1 (the process at step S50 in FIG. 12) will be explained with reference to FIG. 17.

As shown in FIG. 17, the IC card 1 first receives the above-described authentication message 2 request (including the re-encrypted second set of random numbers) from the reader/writer 4, along with the specified logic card identification information and the encryption type (step S51).

Next, the IC card 1 determines whether or not the above-described specified logic card identification information and the encryption type are the same as the logic card identification information and the encryption type in the current authentication information stored at the above-described step S36 (step S52). In addition, the IC card 1 determines whether or not the received authentication message 2 request is normal (step S53). If, as a result of these determinations, the logic card identification information and the encryption type are the same, and the authentication message 2 request is normal, the process advances to step S54, and if there is an abnormality, the process performs an error termination (step S58). In the process to determine whether or not the authentication message 2 request is normal, the IC card 1 decrypts the second set of random numbers that were re-encrypted by the reader/writer 4 and if the decrypted second set of random numbers matches the second set of random numbers initially generated by the IC card 1, the data is determined to be normal.

Next, at step S54, the mutual authentication portion 24 of the IC card 1 creates an authentication message 2 response using the encryption type specified by the reader/writer 4 (step S54). The authentication message 2 response is a message notifying the reader/writer 4 that mutual authentication is complete. Further, as the IC card 1 internal status, the mutual authentication portion 24 stores information indicating that mutual authentication with the reader/writer 4 is complete in a storage portion, such as the memory 30 (step S55).

Next, the communication path encryption portion 25 of the IC card 1 stores the key (the session key) generated during the above-described mutual authentication from step S20 to step S53 as a communication path encryption key, performs communication path encryption in accordance with the above-described specified encryption type and performs data communication with the reader/writer 4 (step S56). Here, the session key is generated from the first set of random numbers and the second set of random numbers that are mutually checked between the reader/writer 4 and the IC card 1 through the above-described mutual authentication. Also, the communication path encryption key is the key used to encrypt data transmitted and received (on the communication path) between the reader/writer 4 and the IC card 1 by non-contact communication. After that, the IC card 1 uses the session key to encrypt the authentication message 2 response created at step S54, and then transmits the response to the reader/writer 4 (step S57).

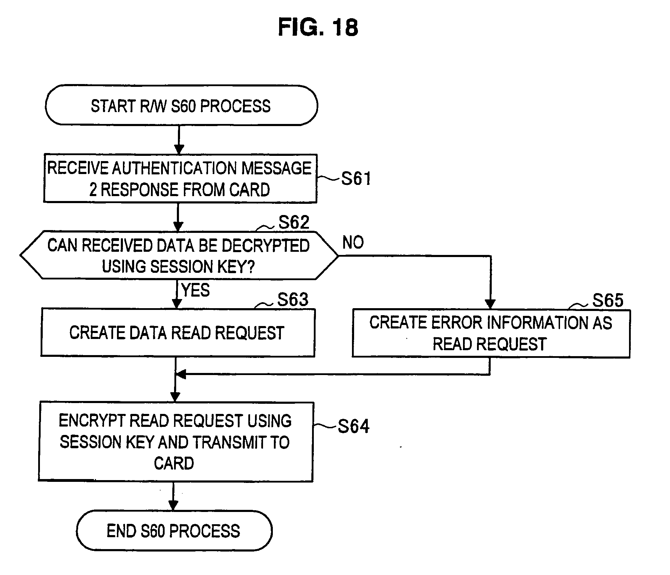

Next, a data read request process by the reader/writer 4 (the process at step S60 in FIG. 12) will be explained with reference to FIG. 18.

As shown in FIG. 18, the reader/writer 4 first receives the above-described authentication message 2 response from the IC card 1 (step S61). Next, the reader/writer 4 determines whether or not the received authentication message 2 response can be decrypted using the above-described session key (step S62). As a result, if the response can be decrypted, the process advances to step S63. If the response cannot be decrypted, the reader/writer 4 creates error information as a read request (step S65).

Next at step S63, the reader/writer 4 creates a data read request (step S63). The data read request is a command that requests user data stored in the IC card 1 relating to a specific service to be read. Further, the reader/writer 4 uses the above-described session key to encrypt the data read request created at step S63, and transmits the encrypted request to the IC card 1 (step S64). On the other hand, if it is determined at step S62 that the response cannot be decrypted, the reader/writer 4 transmits the error information created at the above-described step S65 as the data read request (step S64).

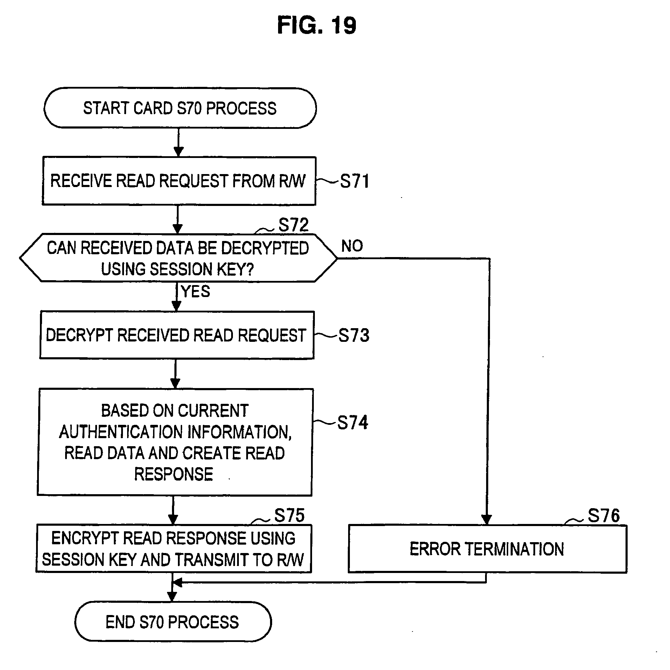

Next, a data read process by the IC card 1 (the process at step S70 in FIG. 12) will be explained with reference to FIG. 19.

As shown in FIG. 19, the IC card 1 first receives the above-described data read request from the reader/writer 4 (step S71). Next, the IC card 1 determines whether or not the received data read request can be decrypted using the above-described session key (step S72). As a result, if the data read request can be decrypted, the process advances to step S73, and if it cannot be decrypted, the process performs an error termination (step S76).

Next at step S73, the IC card 1, with the above-described specified encryption algorithm, uses the above-described session key to decrypt the data read request received at step S71 (step S73). Further, the IC card 1, based on the current authentication information stored at the above-described step S36, reads user data from the logical file structure portion 33 and creates a data read response that contains the user data (step S74). The destination for the read user data is determined by a value specified by the service identification code contained in the current authentication information. After that, the IC card 1 encrypts the created data read response using the above-described session key and transmits it to the reader/writer 4 (step S75).

The access sequence between the IC card 1 and the reader/writer 4 when the IC card 1 is used is explained above with reference to FIG. 12 to FIG. 19. Access to the IC card 1A that is only compatible with the encryption algorithm A shown in FIG. 10, and access to the IC card 1D that is compatible with the encryption algorithms A, B and C shown in FIG. 8 is performed using the same sequence as described above and shown in FIG. 12.

Moreover, when a service providing company switches the encryption algorithm, such as updating the encryption algorithm from B to A, for example, the reader/writer 4 is already compatible with the encryption algorithms A and B, while the user's IC card 1 is compatible with a variety of encryption algorithms. For example, it is assumed that some users use the IC card 1A that is only compatible with the encryption algorithm A, while some users use the IC card 1B that is only compatible with the encryption algorithm B. Meanwhile, some users use the IC card 1D that is compatible with both the encryption algorithm A and the encryption algorithm B shown in FIG. 8. Even in such a case, from the polling response (step S13) from the IC card 1 that is passed over the reader/writer 4, the reader/writer 4 can acquire the encryption type with which the IC card 1 is compatible (or the encryption type that is being used, in the case of the IC card 1D that is compatible with both the encryption algorithms A and B). In this way, in the authentication process etc. from step S20 onwards, the reader/writer 4 can determine whether to use either the encryption algorithm A or the encryption algorithm B to transmit data.

In the above way, in the present embodiment, when using the IC card 1, the encryption type with which the IC card 1 is compatible is notified from the IC card 1 to the reader/writer 4, and the IC card 1 and the reader/writer 4 perform encryption, in accordance with the encryption type, for the mutual authentication process, the communication path encryption process and processes using the service. Accordingly, it is possible to assign the preferable use of different encryption methods for each of the IC cards 1 and each service. For example, with the IC card 1 that is compatible with both the representative encryption algorithm A (AES) and the non-representative encryption algorithm B (DES), either the AES or the DES encryption algorithm can be used to perform data communication. For that reason, the IC card 1 can use the DES encryption algorithm to perform data communication with the reader/writer 4 for a service B that is only compatible with the encryption algorithm B (DES). Meanwhile, the IC card 1 can also use the more reliable AES encryption algorithm to perform data communication with the reader/writer 4 of a service A that is compatible with the encryption algorithm A (AES). The IC card 1 can therefore flexibly be compatible with a plurality of encryption algorithms and can also perform smooth switching of encryption algorithms in relation to IC card systems.

### 5. Structure and encryption of issuing information: FIG. 20 to FIG. 23

Next, the issuing information 60 (refer to FIG. 6) according to the present embodiment will be explained in more detail with reference to FIG. 20 to FIG. 23.

As explained above, the issuing device 5 delivers the issuing information 60 to the IC card 1 in order for the IC card 1 to issue definition information. The issuing information 60 is, for example, the system issuing information or the section issuing information. The system issuing information is information used to issue the new IC card system definition information in the IC card 1. For example, in the example of the logical file structure portion 33 shown in FIG. 8, the system issuing information is information used to issue the system definition information 110B, the section definition information 120C and the area 0 definition information 130C corresponding to the new IC card system B. On the other hand, the section issuing information is information used to issue the definition information corresponding to new encryption algorithms in the IC card 1. For example, in the example of the logical file structure portion 33 shown in FIG. 8, the section issuing information is information used to issue the section definition information 120B and the area 0 definition information 130B that correspond to the new encryption algorithm B and that are subordinate to the existing system definition information 110A.

### I. System issuing information

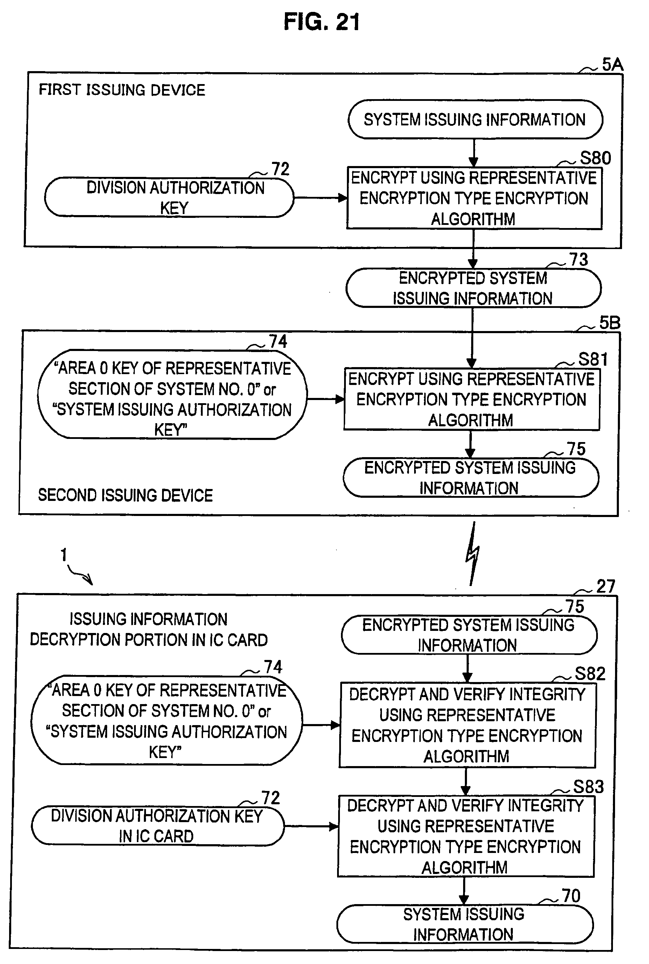

First, an explanation will be given of system issuing information 70 according to the present embodiment, and a process to encrypt and check the integrity of the system issuing information 70, with reference to FIG. 20 and FIG. 21. FIG. 20 is an explanatory diagram showing the structure of the system issuing information 70 according to the present embodiment. FIG. 21 is a pattern diagram showing processes for the encryption and decryption of the system issuing information 70 by the issuing device 5 and the IC card 1 according to the present embodiment.

As shown in FIG. 20, the system issuing information 70 includes the following setting items: the system definition information 110 for the IC card system newly issued in the IC card 1; the representative section section definition information 120 that belongs to the system definition information 110; and the area 0 definition information 130 that belongs to the section definition information 120. More specifically, the system issuing information 70 includes the system key version, the system key, the system code, a first padding, a first check code, an area 0 key version, an area 0 key, the number of area 0 allocated blocks, a second padding, and a second check code. Note that the area 0 key refers to the key contained in the area 0 definition information 130 shown in FIG. 8. The number of area 0 allocated blocks refers to the number of blocks (the size of the storage area) allocated to the area 0 definition area.

In addition, the system issuing information 70 is encrypted in two layers using two types of authorization key, a first authorization key 72 and a second authorization key 74 (these correspond to the authorization key 62 shown in FIG. 6). At that time, given the scope of the encrypted information, a type A system issuing information 70A and a type B system issuing information 70B exist. In the type A system issuing information 70A, first, the system key version, the system key, the system code, the first padding and the first check code are encrypted using the first authorization key 72. Additionally, the encrypted information, the area 0 key version, the area 0 key, the number of blocks allocated to the area 0, the second padding and the second check code are then encrypted using the second authorization key 74. Meanwhile, in the type B system issuing information 70B, the system key version, the system key, the system code, the area 0 key version, the area 0 key, the first padding and the first check code are encrypted using the first authorization key 72. In addition, the encrypted information, the number of blocks allocated to the area 0, the second padding and the second check code are then encrypted using the second authorization key 74.

Here, the first authorization key 72 is the "division authorization key" that indicates the division authorization of the system in the IC card 1. The second authorization key 74 is a "key for the representative section area 0 definition information 130 belonging to the system number 0 system definition information 110" (hereinafter referred to as an "area 0 key of the representative section of the system number 0"), or the "system issuing authorization key." The "system 0 representative section area 0 key" is, for example, the key indicated by the reference numeral 74 in FIG. 24, to be explained later. Also, the representative section is the section definition information 120 corresponding to the above-described representative encryption method (the first encryption method, for example, AES) and the definition information subordinate to the section definition information 120. In the present embodiment, the "area 0 key of the representative section of the system number 0" is used as the second authorization key 74 in the system issuing information 70 for the IC card 1, while the "system issuing authorization key" is used as the second authorization key 74 in the system issuing information 70 for the mobile terminal 2. The reason for this is explained below.

In the process of encrypting the system issuing information 70, the owner of the "division authorization key" 72 is sometimes different from the owner of the "area 0 key of the representative section of the system number 0" or the "system issuing authorization key" 74. For that reason, transmission and reception of the system issuing information 70 occurs between the two owners. In this type of case, it is necessary for each of the respective owners to be in possession of the authorization keys 72 and 74.

Here, as shown in FIG. 21, the issuing device 5 is divided into the "division authorization key owner" first issuing device 5A and the "system 0 representative section area 0 key" or "system issuing authorization key" owner second issuing device 5B, and the system issuing information 70 is encrypted in two layers.

As shown in FIG. 21, the system issuing information 70 is encrypted by the issuing device 5A and the issuing device 5B, using the authorization key 72 and the authorization key 74, respectively. Encrypted system issuing information 75 is delivered to the IC card 1. The IC card 1 decrypts the encrypted system issuing information 75 using the authorization keys 72 and 74 that are securely stored in the IC card 1, and checks the integrity of the system issuing information 70 using the above-described first and second check codes.

More specifically, first, the first issuing device 5A uses the first authorization key 72 (the division authorization key) to encrypt the system issuing information 70 and generates provisional encrypted system issuing information 73 (step S80). Next, the second issuing device 5B uses the second authorization key 74 (the "area 0 key of the representative section of the system number 0" or the "system issuing authorization key") to further encrypt the provisional encrypted system issuing information 73 and generate the encrypted system issuing information 75 (step S81). Note that in both steps of the two layer encryption (step S80 and step S81), the system 0 representative encryption type encryption algorithm (namely the representative encryption method) is used. Note also that the system 0 refers to the IC card system corresponding to the system definition information 120 assigned the system number 0 in the IC card 1.

Additionally, in accordance with the above, a two layer decryption process is performed in the IC card 1. In other words, first, the IC card 1 issuing information decryption portion 27 uses the second authorization key 74 (the "area 0 key of the representative section of the system number 0" or the "system issuing authorization key") that is securely stored in the memory 30, to decrypt the encrypted system issuing information 75, and thus acquires the provisional encrypted system issuing information 73 (step S82). At that time, the issuing information decryption portion 27 uses the second check code (already decrypted) that is contained in the provisional encrypted system issuing information 73 to check the integrity of the provisional encrypted system issuing information 73. Next, the issuing information decryption portion 27 uses the first authorization key 72 (the division authorization key) that is securely stored in the memory 30 to further decrypt the provisional encrypted system issuing information 73, and thus acquires the original system issuing information 70 (step S83). At that time, the issuing information decryption portion 27 uses the first check code (already decrypted) that is contained in the decrypted system issuing information 70 to check the integrity of the system issuing information 70.

Note that in both the steps of the two layer decryption process (step S82 and step S83), the representative encryption type encryption algorithm (namely the representative encryption method) is used. Also, the integrity checks on the system issuing information 70 and the encrypted system issuing information 75 are, for example, achieved by "CBC-MAC" using the above-described first and second check codes.

As explained above with reference to FIG. 20 and FIG. 21, using the two types of encryption authorization keys 72 and 74 to perform two layer encryption and decryption of the system issuing information 70 allows compatibility with a variety of IC card system business types (for example, when the owner of the authorization key 72 is different to the owner of the authorization key 74 and so on). Examples of the business type will now be explained.

For example, in a normal business type, the IC card system owned by the IC card 1 issuer (the service providing company that issues the IC card 1) is the IC card system with the system number 0 in the IC card 1. In this case, the authority to determine the number of storage area blocks allocated to a newly issued system is the authority of the issuer, and it is therefore not problematic for the above-described authorization key 74 to be the "area 0 key of the representative section of the system number 0." This is because a "system 0 administrator" and the "area 0 key owner" are the same. For example, when a transport ticket card system of a given railway corporation is the IC card system with the system number 0 (hereinafter referred to as the "system 0"), and the railway corporation is the IC card 1 issuer, the "issuer," the "system 0 administrator" and the "area 0 key owner" are the same entity (namely the railway corporation).

On the other hand, in a case where the above-described IC card portion 8 is packaged in the mobile terminal 2, a variety of service providing companies jointly use the mobile terminal 2, and there are cases where the system 0 authority is held by an operator of a common area. In this case, by using the authority of the common area operator in the system 0 to issue the area definition area and the service definition area for each service providing company, each service providing company can respectively deliver each service. However, the authority to newly issue a system in the mobile terminal 2 is held by, for example, the mobile telephone carrier. Therefore, the owner of the system 0 area 0 key (the common area operator) and the owner of the system issuing authority (the carrier) are different. In cases such as this, where the "area 0 key owner" and the "system 0 administrator" are different, it is problematic to use the above-described second authorization key 74 as the "area 0 key of the representative section of the system number 0." Here, it is necessary for the second authorization key 74 to be the "system authorization key."

### II. Section issuing information

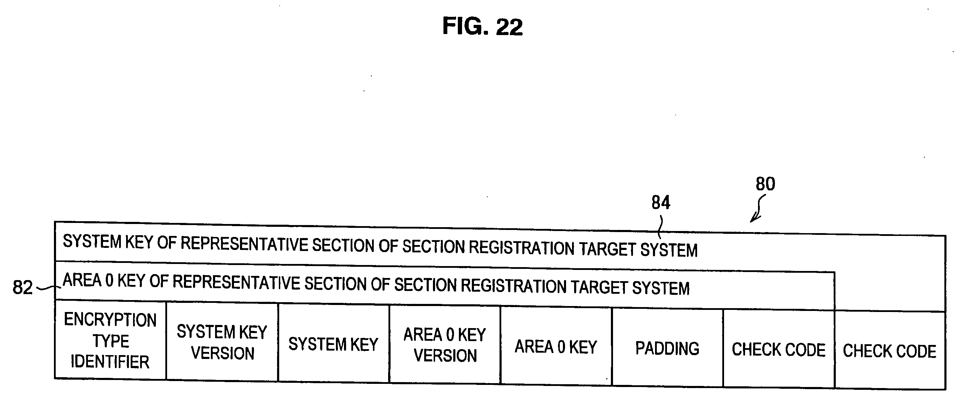

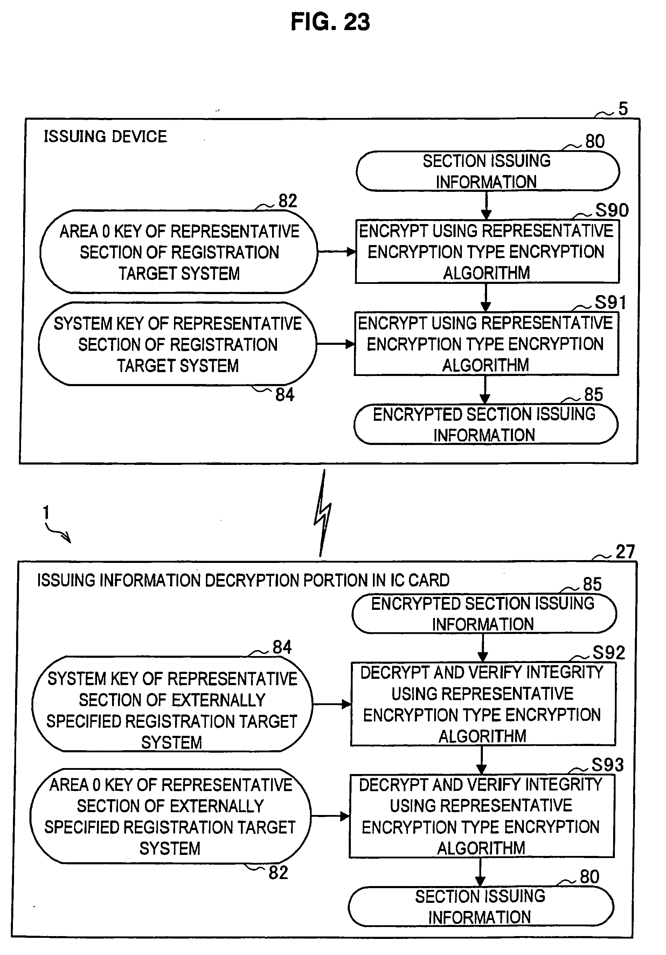

Next, an explanation will be given of section issuing information 80 according to the present embodiment, and a process to encrypt and check the integrity of the section issuing information 80, with reference to FIG. 22 and FIG. 23. FIG. 22 is an explanatory diagram showing the structure of the section issuing information 80 according to the present embodiment. FIG. 23 is a pattern diagram showing the encryption and decryption process of the section issuing information 80 by the issuing device 5 and the IC card 1 according to the present embodiment.

As shown in FIG. 22, the section issuing information 80 includes the following setting items: the section definition information 120 to be newly issued in the IC card 1 and the area 0 definition information 130 that belongs to the section definition information 120. More specifically, the section issuing information 80 includes the encryption type identifier, the system key version, the system key, the area 0 key version, the area 0 key, a padding, a third check code and a fourth check code. Note that the encryption type identifier is identification information indicating the encryption method (encryption algorithm) with which the newly issued section definition information 120 is compatible. The area 0 key and the number of blocks allocated to the area 0 are the same as explained with reference to FIG. 20.

In addition, the section issuing information 80 is encrypted in two layers using a third authorization key 82 and a fourth authorization key 84 (these correspond to the authorization key 62 shown in FIG. 6). More specifically, in the section issuing information 80, the encryption type identifier, the system key version, the system key, the area 0 key version, the area 0 key, the padding and the third check code are encrypted using the third authorization key 82. In addition, the encrypted information and the fourth check code are then encrypted using the fourth authorization key 84.

Here, the third authorization key 82 is the "key for the representative section area 0 definition information 130 belonging to the system definition information 110 of the existing IC card system targeted for registration (hereinafter referred to as the "registration system") by the newly issued section definition information 120." The "area 0 key of the representative section of the registration target system" mentioned here is, for example, the key indicated by the reference numerals 82A and 82B shown in FIG. 24, to be explained later. Also, the fourth authorization key 84 is the "system key for the representative section section definition information 120 belonging to the system definition information 110 for the above-described registration system (hereinafter referred to as the "system key of the representative section of the section registration target system"). The "registration system representative section system key" mentioned here is, for example, the key indicated by the reference numerals 84A and 84B in FIG. 24.

As shown in FIG. 23, the section issuing information 80 is encrypted in two layers by the issuing device 5, using the two authorization keys 82 and 84, and encrypted section issuing information 85 is then delivered to the IC card 1. The IC card 1 decrypts the encrypted section issuing information 85 using the authorization keys 82 and 84 that are securely stored in the IC card 1. and checks the integrity of the section issuing information 80 using the above-described check codes.

More specifically, first, the issuing device 5 uses the third authorization key 82 (the registration system representative section area 0 key) to encrypt the section issuing information 80 (step S90). In addition, the issuing device 5 uses the fourth authorization key 84 (the system key of the representative section of the section registration target system) to further encrypt the section issuing information 80 encrypted using the third authorization key 82 and generate the encrypted section issuing information 85 (step S91). Note that both steps of the two layer encryption process (step S90 and step S91) are performed using the representative encryption type encryption algorithm for the registration system (namely, the representative encryption method).

Additionally, in accordance with the above, a two layer decryption process is performed in the IC card 1. In other words, first, the issuing information decryption portion 27 of the IC card 1 uses the fourth authorization key 84 (the system key of the representative section of the section registration target system) that is securely stored in the memory 30, to decrypt the encrypted section issuing information 85 (step S92). At that time, the issuing information decryption portion 27 uses the fourth check code (already decrypted) that is contained in the encrypted section issuing information 85 to check the integrity of the encrypted section issuing information 85. Next, the issuing information decryption portion 27 uses the third authorization key 82 (the area 0 key of the representative section of the section registration target system) that is securely stored in the memory 30 to further decrypt the decrypted encrypted section issuing information 85, and thus acquires the original section issuing information 80 (step S93). At that time, the issuing information decryption portion 27 uses the third check code (already decrypted) that is contained in the decrypted section issuing information 80 to check the integrity of the section issuing information 80.

Note that in both the steps of the two layer decryption process (step S92 and step S93), the system 0 representative encryption type encryption algorithm (namely the representative encryption method) is used. Also, the integrity checks on the section issuing information 80 and the decrypted encrypted section issuing information 85 are, for example, achieved by "CBC-MAC" using the above-described third and fourth check codes.

In this way, the system issuing information 70 or the section issuing information 80 are encrypted and decrypted using the authorization keys 72 and 73 or the authorization keys 82 and 83, in accordance with the registration system representative section encryption algorithm (namely, the representative encryption method).

### 6. Overview of definition information issuing process: FIG. 24

Next, the key that is used to decrypt and check the integrity of the issuing information 60, and a definition information issuing process by the IC card 1 according to the present embodiment will be explained with reference to FIG. 24. FIG. 24 is a pattern diagram showing a specific example of newly issuing the system definition information 110B or the section definition information 120B and 120D in the logical file structure portion 33 of the IC card 1 according to the present embodiment.

### I. Issuing of system definition information

First, an example will be explained, as shown in FIG. 24, in which the IC card 1 issues the new system definition information 110B based on the above-described system issuing information 70 shown in FIG. 20 and the existing system definition information 110A.

The IC card 1 decrypts the encrypted system issuing information 75 acquired from the issuing device 5, and acquires the system issuing information 70. At the same time, it checks the integrity of the system issuing information 70. In the decryption and integrity check process, the IC card 1 uses the division authorization key 72 (the first authorization key) and the "area 0 key of the representative section of the system number 0" or the "system issuing authorization key" 74 (the second authorization key) shown in FIG. 24. This system key 84A is a "key contained in the area 0 definition information 130A belonging to the section definition information 120A for the representative section of the existing system definition information 110A (system number 0)." The keys 82A and 84A are the keys for the encryption algorithm A that is the system 0 representative encryption method (AES, for example).

After the decryption and integrity check process, the IC card 1 management information issuing portion 28 newly creates the system definition information 110B, the section definition information 120C and the area 0 definition information 130C, based on the system issuing information 70, and registers each of them in the corresponding definition areas, respectively. The values of each of the definition information 110B, 120C and 130C items include those set without change as the values contained in the system issuing information 70, and values calculated by the management information issuing portion 28 based on the internal status of the IC card 1.

For example, the system code for the system definition information 110B, the system key and the system key version for the section definition information 120C, and the area 0 key and area 0 key version for the area 0 definition information 130 are registered as the values contained in the system issuing information 70 without any change. On the other hand, the following items are calculated based on the internal status of the IC card 1. The system number of the system definition information 110B is set as the value "last created system number +1." In the example shown in the figures, the system number of the existing system definition information 110A is "0" and the system number of the system definition information 110B is therefore set as "1." Also, the service definition information 120C encryption type identifier is set as the representative encryption type identifier. The number of blocks allocated to the area 0 definition information 130C must be a value that does not exceed the number of blocks allocated to the area 0 for the system number 0, and therefore, from the number of blocks allocated to the area 0 for the system number 0, the number of blocks allocated is less than the number of blocks allocated to the area 0 specified in the system issuing information 70.

As explained above, the system definition information 120B, the section definition information 120C and the area 0 definition information 130C are issued with regard to the new IC card system with the system number 1, based on the system number 0 system representative section definition information 110A, 120A and 130A, and on the system issuing information 70 acquired from the issuing device 5.

II. Issuing section definition information Next, an example will be explained, as shown in FIG. 24, in which the IC card 1 issues the section definition information 120B and the area 0 definition information 130B corresponding to a new non-representative encryption type (the encryption algorithm B) in the registration system, based on the above-described section issuing information 80 shown in FIG. 22 and the section definition information 120A and the area 0 definition information 130A corresponding to the existing representative encryption type (the encryption algorithm A).

The IC card 1 decrypts the encrypted section issuing information 85 acquired from the issuing device 5 and acquires the section issuing information 80. At the same time, it checks the integrity of the section issuing information 80. In this decryption and integrity check process, the IC card 1 uses the "system 0 representative section system key 84A" and the "system 0 representative section area 0 key 82A" shown in FIG. 24. The system 84A is the "system key contained in the representative section section definition information 120A belonging to the existing system definition information 110A." Also, the area 0 key 82A is the "area 0 key contained in the area 0 definition information 130A belonging to the section definition information 120A." The keys 82A and 84A are keys for the representative encryption method encryption algorithm A (AES, for example).

After the decryption and integrity check process, the IC card 1 management information issuing portion 28 creates the section definition information 120B and the area 0 definition information 130B corresponding to the new non-representative encryption algorithm, based on the section issuing information 80, and registers each of them in the corresponding definition areas, respectively. The values of each of the definition information 120B and 130B items include those set without change as the values contained in the section issuing information 80, and also values calculated by the management information issuing portion 28 based on the internal status of the IC card 1.

For example, the encryption type identifier, the system key and the system key version for the section definition information 120B , and the area 0 key and the area 0 key version for the area 0 definition information 130B are registered as the values contained in the section issuing information 80 without any change. On the other hand, the number of blocks allocated to the area 0 definition information 130B is calculated based on the internal status of the IC card 1. The number of newly created blocks allocated to the section area 0 is set as a value calculated by deleting the number of allocated blocks consumed by the newly created section definition information 120B and the area 0 definition information 130B from the number of blocks allocated to the representative section area 0. The number of blocks allocated to the representative section area 0 is also re-set as the same value. In the above explanation, an example is shown in which common allocated blocks are held between the sections, but an allocated blocks item may be added within the section issuing information 80, and the system may be set up such that the number of allocated blocks is not shared between the sections.

In the above-described way, the section definition information 120B and the area 0 definition information 130B corresponding to the new encryption algorithm B are issued, based on the registration system representative section definition information 120A and 130A, and the section issuing information 80 acquired from the issuing device 5. Further, even when the system with the system number 1 is the registration system, by performing the process in the above-described way, the section definition information 120D and the area 0 definition information 130D corresponding to the new encryption algorithm C are issued, based the definition information 120C and 130C for the representative section, and the section issuing information 80.

III. Issuing area/service definition information Next, a method for issuing new area definition information 140 and service definition information 150 will be explained. When issuing a new area, the issuing device 5 encrypts area issuing information that includes the setup values of the area definition information 140 for the registration area using a registration area new area key and transmits the area issuing information to the IC card 1. By using the same new area key to encrypt the area issuing information, the IC card 1 checks the integrity of the area issuing information. In the same way, when issuing a new service, the issuing device 5 encrypts service issuing information that includes the setup values of the service definition information 150 for the registration service using a registration service new area key, and transmits the service issuing information to the IC card 1. By decrypting the service issuing information using the same registration service new area key, the IC card 1 checks the integrity of the service issuing information.

As explained above, when issuing the system definition information 110 and the section definition information 120, the authorization keys held by the owners with the issuing authority are used to encrypt the issuing information 70 and the issuing information 80 using the representative section encryption method (AES, for example). In contrast, when issuing the area definition information 140 or the service definition information 150, the registration service area or service new area key is used to encrypt the area issuing information or the service issuing information. At this time, regardless of the representative encryption type (AES, for example) set by the representative section, the selected encryption type (AES or DES, for example) defined by the section definition information 120 to which the new area belongs can be used.

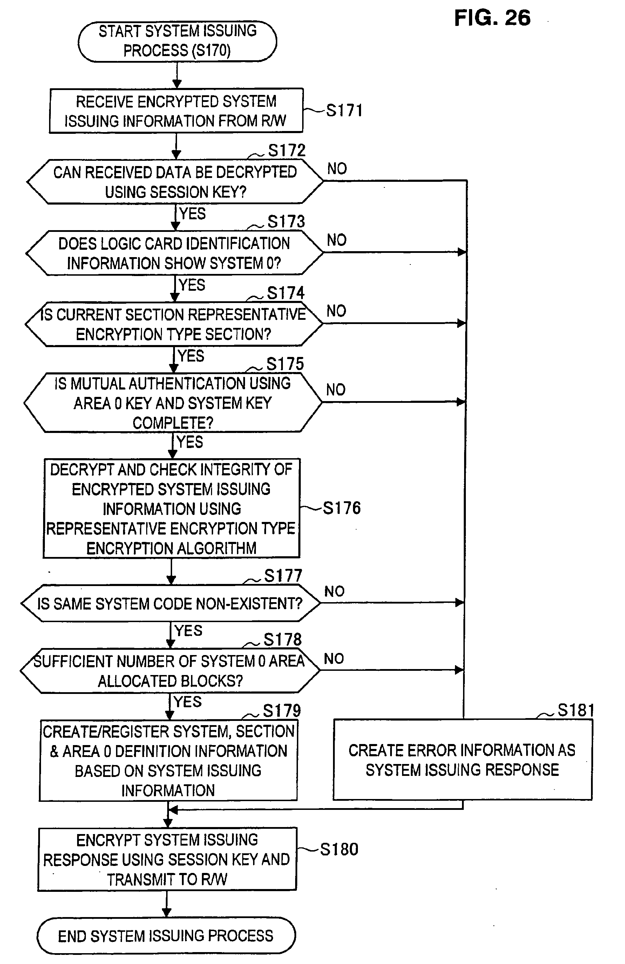

7. System issuing process: FIG. 25 and FIG. 26 Next, a system issuing process to newly issue the system definition information 110 will be explained with reference to FIG. 25. FIG. 25 is a sequence diagram showing the sequence of the system issuing process by the reader/writer 6 of the issuing device 5 and the IC card 1 according to the present embodiment. Note that FIG. 25 is an example of the system issuing process for the system with the system code "0xEE02" in FIG. 24.

As shown in FIG. 25, in the system issuing process, first, after the reader/writer 6 of the issuing device 5 has captured the IC card 1 by polling (step S101 to step S110), the reader/writer 6 and the IC card 1⁻ perform mutual authentication and encrypt the communication path (step S120 to step S150). Next, the reader/writer 6 transmits the encrypted system issuing information 75 to the IC card 1 (step S160). When this is done, the IC card 1 decrypts the encrypted system issuing information 75 and acquires the system issuing information 70. Based on the acquired system issuing information 70, the IC card 1 performs the system issuing process and transmits a system issuing response (an issuing complete or an error notification) to the reader/writer 6 (step S170). In accordance with the response, the reader/writer 6 performs system issuing completion post-processing or performs error response processing (step S190).

Note that each of the steps S101 to step S160 shown in the system issuing sequence in FIG. 25 are substantially the same as the steps S1 to S60 in the above-described access sequence performed when the IC card 1 is used, as shown in FIG. 12 to FIG. 19, and a detailed explanation is therefore omitted here. However, of the system issuing sequence steps S101 to S160 shown in FIG. 25, the point at which the IC card 1 communicates with the reader/writer 6 of the issuing device 5, the point at which the system code "0xFFFF" is also added to the authentication message 1 request and transmitted at step S120, and the point at which the encrypted system issuing information 75 is transmitted at step S160 are different from the steps S1 to S60 of the access sequence shown in FIG. 12 to FIG. 19.

Using the sequence shown in FIG. 25, it is possible to securely perform, using the representative section encryption method, the mutual authentication process, the communication path encryption process and the integrity check process on the system issuing information 70 between the IC card 1 and the reader/writer 6. As a result, based on the securely acquired system issuing information 70, the IC card 1 can issue definition information (the system definition information 110B, the section definition information 120B and the area 0 definition information 130C) relating to the new IC card system, and register the definition information in the logical file structure portion 33.

Next, the system issuing process (step S170 in FIG. 25) by the IC card 1 according to the present embodiment will be explained in more detail with reference to FIG. 26. FIG. 26 is a flow chart showing the system issuing process by the IC card 1 according to the present embodiment.

As shown in FIG. 26, the issuing information receiver 29 of the IC card 1 receives the encrypted system issuing information 75 from the reader/writer 6 of the issuing device 5 (step S171). Next, the IC card 1 uses the above-described session key to determine whether or not the encrypted system issuing information 75 received at step S171 can be decrypted (step S172). The session key is the communication path encryption key generated from the set of random numbers used in the mutual authentication and communication path encryption process at step S120 to step S160 in FIG. 25.

In addition, the IC card 1 determines whether or not the logic card identification information indicates the system 0 system. In other words, it determines whether or not the system number included in the logic card identification information is "0" (step S173). The logic card identification information is information that includes the system number contained in the system definition information 110 for the system code specified by the reader/writer 6 at step S101, and the IC card 1 identification information (card ID) and so on. At step S110, the logic card identification information is transmitted from the IC card 1 to the reader/writer 6 as the polling response. The determination process performed at step S173 prevents the system issuing process being performed using definition information for an IC card system other than the system 0.

Additionally, the IC card 1 determines whether or not the IC card 1 current section is the section storing the representative encryption type (the representative section) (step S174). The current section is the section definition information 120 corresponding to the encryption method that is currently being used by the IC card 1 and the reader/writer 6 to perform communication. The section storing the representative encryption type is the section definition information 120A that stores the identifier indicating the representative encryption type (the first encryption method, AES, for example). The determination process performed at step S174 prevents the system issuing process being performed using the non-representative encryption type encryption algorithm (the second encryption method, DES, for example).

Moreover, the IC card 1 determines whether or not the mutual authentication between the reader/writer 6 and the IC card 1 using the representative section system key and the area 0 key is complete (step S175). By doing this, the reliability of the encryption method keys (the system key and the area 0 key) stored in the section definition information 120A and the area 0 definition information 130A for the representative section can be checked, and the integrity of the system issuing information 70 can be checked using these keys and the representative encryption method.

When the determination conditions at the above-described steps S172 to S175 are all fulfilled, the process advances to step S176. On the other hand, when at least one of the determination conditions is not fulfilled, the process advances to step S181, and the IC card 1 creates error information as the system issuing response (step S181).

Next, the issuing information decryption portion 27 of the IC card 1 follows the order shown in FIG. 21 to decrypt the encrypted system issuing information 75 with the representative encryption type encryption algorithm A, using the authorization keys 72 and 74 stored in the memory 30, and then to check the integrity of the system issuing information 70 thus acquired (step S176). In this decryption and integrity check process, the "area 0 key of the representative section of the system number 0" or the "system issuing authorization key" 74 corresponding to the representative encryption type is used as the second authorization key 74, and the "division authorization key" corresponding to the representative encryption type is used as the first authorization key 72 (refer to FIG. 24). At step S176, decrypting and checking the integrity of the system issuing information 70 prevents tampering with or stealing of the system issuing information 70, and restricts the issuing of invalid systems.

After that, the management information issuing portion 28 of the IC card 1 determines whether or not the system definition information 110 with the same system code as the system code specified in the system issuing information 70 exists in the logical file structure portion 33 (step S177). Further, the IC card 1 management information issuing portion 28 determines whether or not the number of allocated blocks defined by the system 0 area 0 definition information 130 has a sufficient value to allocate the number of area 0 allocated blocks specified in the system issuing information 70 (step S178).

When the two determination conditions at the above-described step S177 and step S178 are fulfilled, the process advances to step S179. On the other hand, when at least one of the determination conditions is not fulfilled, the process advances to step S181 and the IC card 1 creates error information as the system issuing response (step S181).

Next, the management information issuing portion 28 of the IC card 1 creates the system definition information 110B, the section definition information 120C and the area 0 definition information 130C for the registration IC card system, based on the values of each item specified in the above-described system issuing information 70 and on the internal status of the IC card 1 (step S179). Then, the management information issuing portion 28 registers the created definition information 110B, 120C and 130C to the relevant storage areas (the system definition area, the section definition area, the area 0 definition area) in the logical file structure portion 33. For example, the system number is set as the last issued system number plus one. In this way, the new system definition information etc. is issued based on the system issuing information 70.

When the system issuing process is performed at step S179, the IC card 1 creates the system issuing response that indicates that the system issuing process is complete, and, after encrypting the system issuing response using the above-described session key, transmits the encrypted response to the reader/writer 6 (step S180). On the other hand, when error information is created at step S181, the IC card 1 encrypts the error information with the above-described session key as the system issuing response, and transmits the encrypted response to the reader/writer 6 (step S180).

The system issuing process according to the present embodiment (for example, the system issuing process for the system code "0xEE02" shown in FIG. 24) is explained above. In the system issuing process, mutual authentication and encryption of the communication path between the reader/writer 6 and the IC card 1 is performed using the representative encryption type encryption algorithm (the first encryption method), and additionally, decryption and integrity check of the system issuing information 70 is performed, also using the representative encryption type encryption algorithm. Therefore, by setting the representative encryption type encryption algorithm as the highly reliable AES encryption algorithm or the like, new IC card system definition information can be safely issued in the IC card 1 that is compatible with a plurality of encryption methods.

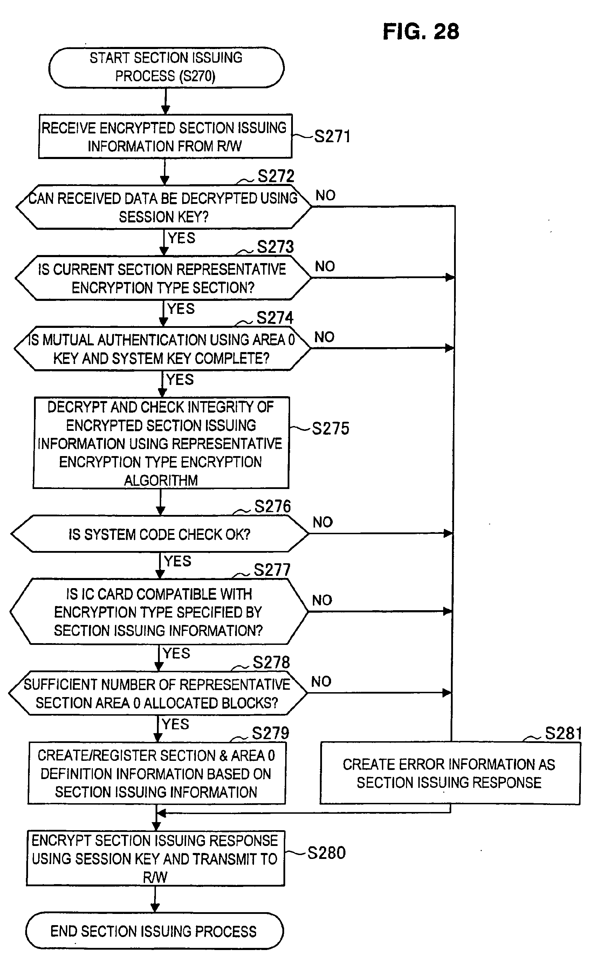

### 8. Section issuing process: FIG. 27 and FIG. 28

Next, a section issuing process to newly issue the section definition information 120 and so on corresponding to an encryption method apart from the representative encryption method will be explained with reference to FIG. 27. FIG. 27 is a sequence diagram showing the sequence of the section issuing process by the reader/writer 6 of the issuing device 5 and the IC card 1 according to the present embodiment. Note that FIG. 27 is an example of adding and registering the encryption algorithm <algo_C> section to the IC card system (the system definition information II0B) with the system code "0xEE02" in the above-described FIG. 24.

As shown in FIG. 27, in the section issuing process, first, after the reader/writer 6 of the issuing device 5 has captured the IC card 1 by polling (step S201 to step S210), the reader/writer 6 and the IC card 1 perform mutual authentication and encrypt the communication path (step S220 to step S250). Next, the reader/writer 6 transmits the encrypted section issuing information 85 to the IC card 1 (step S260). When this is done, the IC card 1 decrypts the encrypted section issuing information 85 and acquires the section issuing information 80. Based on the acquired section issuing information 80, the IC card 1 performs the section issuing process and transmits a section issuing response (an issuing complete or an error notification) to the reader/writer 6 (step S280). In accordance with the response, the reader/writer 6 performs section issuing completion post-processing or performs error response processing (step S290).

Note that each of the steps S201 to S260 shown in the section issuing sequence in FIG. 27 are substantially the same as the steps S1 to S60 in the above-described access sequence performed when the IC card 1 is used, as shown in FIG. 12 to FIG. 19, and a detailed explanation is therefore omitted here. However, of the section issuing sequence steps S201 to S260 shown in FIG. 27, the point at which the IC card 1 communicates with the reader/writer 6 of the issuing device 5, the point at which the system code "0xFFFF" is also added to the authentication message 1 request and transmitted at step S220, and the point at which the encrypted section issuing information 85 is transmitted at step S260 are different from the steps S1 to S60 of the access sequence shown in FIG. 12 to FIG. 19.

Using the sequence shown in FIG. 27, it is possible to securely perform, using the representative section encryption method (the first encryption method, AES, for example), the mutual authentication process, the communication path encryption process and the integrity check process on the section issuing information 80 between the IC card 1 and the reader/writer 6. As a result, based on the securely acquired section issuing information 80, the IC card 1 can issue the definition information (the section definition information 120 and the area 0 definition information 130D) relating to the new non-representative encryption method (the second encryption method, DES, for example), and register the definition information in the logical file structure portion 33.

Next, the section issuing process (step S270 in FIG. 27) by the IC card 1 according to the present embodiment will be explained in more detail with reference to FIG. 28. FIG. 28 is a flow chart showing the section issuing process of the IC card 1 according to the present embodiment.

As shown in FIG. 28, the issuing information receiver 29 of the IC card 1 receives the encrypted section issuing information 85 from the reader/writer 6 of the issuing device 5 (step S271). Next, the IC card 1 uses the above-described session key to determine whether or not the encrypted section issuing information 85 received at step S271 can be decrypted (step S272). The session key is the communication path encryption key generated from the set of random numbers used in the mutual authentication and communication path encryption process at step S220 to step S260 in FIG. 27.

Additionally, the IC card 1 determines whether or not the IC card 1 current section is the section storing the representative encryption type (the representative section) (step S273). The current section is the section definition information 120 corresponding to the encryption method that is currently being used by the IC card 1 and the reader/writer 6 to perform communication. The section storing the representative encryption type is the section definition information 120A that stores the identifier indicating the representative encryption type (the first encryption method, AES, for example). The determination process performed at step S273 prevents the section issuing process being performed using the non-representative encryption type encryption algorithm (the second encryption method, DES, for example).

Moreover, the IC card 1 determines whether or not the mutual authentication between the reader/writer 6 and the IC card 1 using the representative section system key and the area 0 key is complete (step S274). By doing this, the reliability of the representative encryption method keys (the system key and the area 0 key) stored in the section definition information 120A and the area 0 definition information 130A for the representative section can be checked, and the integrity of the section issuing information 80 can be checked using these keys and the representative encryption method.

When the three determination conditions at the above-described steps S272 to S274 are all fulfilled, the process advances to step S275. On the other hand, when at least one of the determination conditions is not fulfilled, the process advances to step S281, and the IC card 1 creates error information as a section issuing response (step S281).

Next, the issuing information decryption portion 27 of the IC card 1 follows the order shown in FIG. 23 to decrypt the encrypted section issuing information 85 with the representative encryption type encryption algorithm A, using the authorization keys 82 and 84 stored in the memory 30, and then to check the integrity of the section issuing information 80 thus acquired (step S275). In this decryption and integrity check process, a "registration system representative section system key 84B" specified by the reader/writer 6 is used as the fourth authorization key 84, and an "area 0 key for the representative section of the section registration target system 82B" specified by the reader/writer 6 is used as the third authorization key 82 (refer to FIG. 24). At step S275, decrypting and checking the integrity of the section issuing information 80 prevents tampering with or stealing of the section issuing information 80, and restricts the issuing of invalid sections.

After that, the management information issuing portion 28 of the IC card 1 checks the correctness of the system code (step S276). More specifically, when the system code stored in the system definition information 110B for the current section is "0xFFFF," as specified by the reader/writer 6 at step S220, the management information issuing portion 28 checks whether or not the system definition information 110 that has the same system code as the system code specified in the section issuing information 80 exists in the logical file structure portion 33. On the other hand, when the system code stored in the system definition information 110B for the current section is not the system code "0xFFFF," the management information issuing portion 28 checks that the system code stored in the system definition information 110B and the system code specified in the section issuing information 80 are the same.

Next, the management information issuing portion 28 of the IC card 1 determines whether or not the IC card 1 is compatible with the encryption type encryption method specified in the section issuing information 80 (step S277). For this, for example, the specified encryption type identifier is compared with the encryption method identifiers with which the IC card 1 is compatible that are stored in the IC card 1. Determining compatibility in this way prevents the pointless issuing of the section definition information 120 for an encryption method with which the IC card 1 is not compatible.

Further, the management information issuing portion 28 of the IC card 1 determines whether or not the free space for the number of blocks to be consumed for section registration is sufficient for the number of allocated blocks defined in the registration system representative section area 0 definition information 130 (step S278). If there is no free space in the blocks allocated to the representative section area 0, the section cannot be added and registered.

When the three determination conditions at the above-described steps S276 to S278 are fulfilled, the process advances to step S279. On the other hand, when at least one of the determination conditions is not fulfilled, the process advances to step S281 and the IC card 1 creates error information as the section issuing response (step S281).

Next, the IC card 1 management information issuing portion 28 creates the section definition information 120D and the area 0 definition information 130D belonging to the registration section, based on the values of each item specified in the above-described section issuing information 80 and on the internal status of the IC card 1 (step S279). The management information issuing portion 28 then registers the created definition information 120D and 130D to the relevant storage areas (the section definition area, the area 0 definition area) that are subordinate to the system definition area in the logical file structure portion 33. For example, the section definition information 120D encryption type identifier and the system key are registered as the values specified in the section issuing information 80 without change. In this way, the section definition information and so on for the new encryption type is issued subordinate to the existing system definition information 110B. based on the section issuing information 80.

Further, when issuing the section, the number of all the blocks allocated to the area 0 in the registration system is the number of blocks remaining when only the number of blocks to be consumed for the section registration is deleted from the number of allocated blocks before the section registration is performed. The number of blocks allocated to the area 0 in the system is the same in all of the area 0 definition information 130, and this is because any unallocated remaining blocks are shared by all the sections within the system.

When the section issuing process is performed at the above-described step S279, the IC card 1 creates the section issuing response that indicates that the section issuing process is complete, and, after encrypting the section issuing response using the above-described session key, transmits the encrypted response to the reader/writer 6 (step S280). On the other hand, when error information is created at step S281, the IC card 1 encrypts the error information with the above-described session key as the section issuing response, and transmits the encrypted response to the reader/writer 6 (step S280).

The section issuing process according to the present embodiment (for example, the encryption algorithm C section issuing process for the system code "0xEE02" shown in FIG. 24) is explained above. In the section issuing process, mutual authentication and encryption of the communication path between the reader/writer 6 and the IC card 1 is performed using the representative encryption type encryption algorithm (the first encryption method), and additionally, decryption and integrity check of the section issuing information 80 is performed, also using the representative encryption type encryption algorithm. Therefore, by setting the representative encryption type encryption algorithm as the highly reliable AES encryption algorithm or the like, definition information for a new encryption method (DES, for example) can be safely issued in the IC card 1 that is compatible with a plurality of encryption methods.

Note that, in the above-described issuing process sequence shown in FIG. 25 to FIG. 28, the IC card 1 acquires the system issuing information 70 or the section issuing information 80, by performing non-contact communication with the reader/writer 6 of the issuing device 5 and then issues the system or the section. This issuing process sequence may be performed, for example, by passing the IC card 1 over the reader/writer 6 of the issuing device 5 when the IC card 1 is shipped from a factory. Alternatively, the above-described issuing process sequence maybe performed by passing the IC card 1 over the reader/writer 6 of the issuing device 5 or the reader/writer 4 of the service providing company device 3 located in a specific location, after the IC card 1 has been distributed.

When the mobile terminal 2 is used, the issuing process sequence may be performed by passing the mobile terminal 2 over the reader/writer 6 or the reader/writer 4. Alternatively, the issuing process sequence may be performed by using an issuing application installed in the mobile terminal 2 for the mobile terminal 2 to access, via the network 7, a remote issuing server that is the issuing device 5.

For example, when a user downloads the issuing application to the mobile terminal 2 from a server and activates the issuing application, a message querying "Initialize card?" appears on the screen of the mobile terminal 2. If the user selects "yes" in response to this query, the mobile terminal 2 is connected to the remote issuing server via the network 7, and the server administrator (the common area operator) authorization key is used to issue areas for the area/service and so on. At that time, by the server transmitting the encrypted issuing information to the IC card portion 8 of the mobile terminal 2, the above-described issuing application automatically issues areas for the new system and section etc. in the mobile terminal 2.

Even when the mobile terminal 2 communicates in this way with the issuing device 5 via the network 7, by replacing the reader/writer 6 shown in FIG. 25 or FIG. 26 with the remote issuing server as the issuing device 5, the issuing process can be performed in the same way as the above-described sequence.

When either the above-described IC card 1 or the mobile terminal 2 is used, in both cases, for example, the above-described authorization keys 72, 74, 82 and 84 are securely stored in advance in the IC chip, before shipment from a factory. By doing this, even after the IC card 1 or the mobile terminal 2 has been distributed, systems and sections can be additionally issued by using the internally stored authorization keys 72, 74, 82 and 84.

### 9. Effects

The communication system formed by the IC card 1 (or the mobile terminal 2), the service providing company device 3 and the issuing device 5 according to the present embodiment, the use of the IC card 1 in the system, and the methods of issuing management information are explained in detail above.

In the present embodiment, the IC card 1 is equipped with hardware (encryption processing circuits and the like) that is compatible with a plurality of encryption methods. Then, by establishing a hierarchical structure for the definition information in the logical file structure portion 33 of the IC card 1, the section definition information 120 set for each encryption method is newly added, subordinate to the highest level system definition information 110. Each of the section definition information 120 stores the system key corresponding to each encryption method, and the identifier for that encryption method. Then, the single representative encryption method is specified from among the plurality of encryption methods with which the IC card 1 is compatible.

In addition, the issuing device 5 transmits the system issuing information 70 or the section issuing information 80, encrypted using the representative encryption method, to the IC card 1. The IC card 1 decrypts the system issuing information 70 or the section issuing information 80 using the representative encryption method and checks the integrity of the issuing information. Then, based on the system issuing information 70 or the section issuing information 80, the IC card 1 issues the system definition information 110 for the new IC card system, or the section definition information 120 for the new encryption method, and registers the definition information in the IC card 1.

With this configuration, in the IC card 1 that is compatible with a plurality of encryption methods, definition information corresponding to a selected encryption method can be added, changed and deleted as appropriate. For example, in the IC card 1 that is compatible with both the DES and AES encryption algorithms, if only the section definition information 120 for the AES encryption algorithm is issued, the IC card 1 becomes a dedicated AES encryption algorithm card. If the section definition information 120 for both the DES and AES encryption algorithms are issued, the IC card 1 is compatible with both the DES and the AES encryption algorithms.

Then, when issuing the section definition information 120, the mutual authentication with the reader/writer 6, the communication path encryption, and packaging of the DES issuing information are all performed using the representative encryption method (AES, for example) until initialization of the definition information, such as the keys. However, if the section definition information 120 for another encryption method (DES, for example) is issued, subsequent issuing of the area definition information 140 and the service definition information 150, or use of the IC card 1 can be performed using the DES encryption algorithm.

In this way, in the present embodiment, the encryption method used when issuing the system definition information 110 or the section definition information 120 can be different to the encryption method used when using the IC card 1. Moreover, the encryption methods can be freely selected, as long as the IC card 1 is compatible with the selected encryption method or methods.

Further, if a more reliable encryption algorithm (AES, for example) than another encryption method (DES, for example) is selected as the representative encryption method, the DES section definition information 120 issuing process can be performed more safely using the AES encryption algorithm. In this way, if the AES encryption algorithm is the representative encryption type, the AES encryption algorithm can compensate for the weaker reliability of the DES encryption algorithm.

In other words, with the present embodiment, an area corresponding to a new IC card system (hereinafter referred to as the "system") or an area corresponding to a new encryption type (hereinafter referred to as the "section") can be created in the logical file structure portion 33 using the representative section key (the representative encryption method key). The section and the system can only be created using the representative encryption method (AES). In order to create the non-representative section (DES), which is less reliable than AES, it is necessary to perform mutual authentication with the AES encryption algorithm and use the AES key to package the DES definition information (in other words, it is necessary to generate the section issuing information 80). Therefore, until the DES section is issued, processes can be performed safely using the AES key. The key contained in the packaged section issuing information 80 is the DES key, but the encryption method used to encrypt the section issuing information 80 is the AES encryption algorithm.

Also, when issuing a new system in order to cause the IC card 1 to be compatible with a new IC card system, the new system cannot be issued without using the representative encryption method (AES) key. Moreover, when a system has been newly issued, first, the representative section corresponding to the AES encryption algorithm is created, and therefore, when subsequently issuing sections subordinate to the system, AES is certainly used. As a result, a system can only be issued using the AES encryption algorithm, and in this way, the AES encryption algorithm can compensate for the lower reliability of the DES encryption algorithm.

For the above-explained reasons, as the single IC card 1 is compatible with a plurality of encryption methods, the service providing company that delivers a service using the IC card 1 can select the encryption method to be used from among the plurality of encryption algorithms with which the IC card 1 is compatible. Further, even if service providing companies choose a different encryption method, a plurality of services with differing encryption methods can be delivered using the single IC card 1.

Moreover, if a given service providing company switches the encryption method currently being used, if the IC card 1 that is compatible with a plurality of encryption methods is being used, it is possible to switch the encryption method without recalling the IC card 1. For this reason, the encryption method used by the IC card 1 can be switched smoothly, and the effort, time and cost required for the switchover operation can be reduced.

In addition, by deciding the representative encryption method, it is possible to reduce the types of authorization keys used in the issuing process, to clarify authority, and to simplify operation. After newly creating the system definition information 110, the encryption methods used can be increased at the discretion of the holders of authority below the system definition information 110. Also, as the issuing information is encrypted by the issuing device 5, and the IC card 1 decrypts and checks the integrity of the issuing information, tampering with and stealing of the issuing information can be prevented.

The present application contains subject matter related to that disclosed in Japanese Priority Patent Application JP 2008-149824 filed in the Japan Patent Office on June 06, 2008, the entire content of which is hereby incorporated by reference.
It should be understood by those skilled in the art that various modifications, combinations, sub-combinations and alterations may occur depending on design requirements and other factors insofar as they are within the scope of the appended claims or the equivalents thereof.

## Claims

1. An information processing device, comprising:
a data storage portion that is capable of storing user data used in a particular service using non-contact communication and management information used to manage the user data in different storage areas for each of a plurality of different encryption methods and that has at least a first storage area storing first management information corresponding to a first encryption method;
an issuing information receiver that receives issuing information that is encrypted using the first encryption method from an issuing device that delivers the issuing information to issue second management information corresponding to a second encryption method;
an issuing information decryption portion that decrypts the received issuing information with the first encryption method, based on the first management information corresponding to the first encryption method that is stored in the first storage area of the data storage portion; and
a management information issuing portion that, based on the decrypted issuing information, issues the second management information corresponding to the second encryption method and stores the second management information in a second storage area in the data storage portion.

2. The information processing device according to claim 1, wherein
the storage area of the data storage portion has a hierarchical structure formed of a section definition area that is established for at least each of the plurality of encryption methods with which the information processing device is compatible, and of at least one area definition area that belongs to the section definition area,
the management information includes at least section definition information that is stored in the section definition area, and area definition information that is stored in the area definition area,
the first storage area of the data storage portion includes at least a first section definition area that stores first section definition information corresponding to the first encryption method,
the first management information includes at least the first section definition information,
the first section definition information includes a first key used for authentication to access the first section definition area and identification information for the first encryption method,
the issuing information, as the second management information, is section issuing information used to issue second section definition information corresponding to the second encryption method,
the section issuing information includes a second key used for authentication to access a second section definition area, and identification information for the second encryption method, and
the information processing device further comprises:
a mutual authentication portion that performs mutual authentication with the issuing device with the first encryption method, using the first encryption method identification information stored in the first section definition area, wherein
when the mutual authentication performed by the mutual authentication portion is successful, the issuing information receiver receives the section issuing information from the issuing device, the section issuing information being encrypted with the first encryption method using the first key,
the decryption portion uses the first key stored in the first section definition area to decrypt the received section issuing information with the first encryption method, and
the management information issuing portion, based on the decrypted section issuing information, issues the second section definition information that includes the second key and the second encryption method identification information, and stores the second section definition information in the second section definition area that is the second storage area of the data storage portion.

3. The information processing device according to claim 2, wherein
the first storage area and the second storage area of the data storage portion respectively store the first encryption method identification information and the second encryption method identification information, and
the information processing device further comprises:
a communication portion that performs non-contact communication with a service provider device that delivers the particular service; and
a mutual authentication portion that, when an authentication request is received from the service provider device by the communication portion, based on one of the first and the second encryption method identification information stored in one of the first and the second storage area, selects the storage area corresponding to an encryption method specified by the authentication portion, and uses the management information stored in the selected storage area to perform mutual authentication with the service provider device with the encryption method specified in the authentication request.

4. The information processing device according to claim 3, further comprising:
a communication portion that performs non-contact communication with an external device; and
an encryption processing portion compatible with the plurality of encryption methods that encrypts and decrypts, with one of the plurality of encryption methods, data communicated by non-contact communication by the communication portion; wherein
the issuing information decryption portion, using the encryption processing portion, decrypts the issuing information received from the issuing device with the first encryption method.

5. The information processing device according to claim 4, wherein
the first encryption method is a single representative encryption method that is selected from among the encryption methods with which the encryption processing portion is compatible, and the first encryption method is more reliable than the second encryption method.

6. The information processing device according to claim 5, wherein
the information processing device is one of an IC card and a mobile terminal equipped with an IC card portion capable of non-contact communication with an external device.

7. An information processing device, comprising:
a data storage portion that is capable of storing user data used in a particular service using non-contact communication and management information used to manage the user data in different storage areas for each of a plurality of different encryption methods and that has at least a first storage area storing first management information corresponding to a first encryption method;
an issuing information receiver that receives issuing information that is encrypted using the first encryption method from an issuing device that delivers the issuing information to issue second management information corresponding to the first encryption method;
an issuing information decryption portion that decrypts the received issuing information with the first encryption method, based on the first management information corresponding to the first encryption method that is stored in the first storage area of the data storage portion; and
a management information issuing portion that, based on the decrypted issuing information, issues the second management information corresponding to the first encryption method and stores the second management information in a second storage area in the data storage portion.

8. The information processing device according to claim 7, wherein
the storage area of the data storage portion has a hierarchical structure formed of at least a system definition area established corresponding to each of a non-contact communication system with which the information processing device is compatible, at least one section definition area for each of the plurality of encryption methods with which the information processing device is compatible, the section definition area belonging to the system definition area, and at least one area definition area belonging to the section definition area,
the management information includes at least system definition information that is stored in the system definition area, section definition information that is stored in the section definition area, and area definition information that is stored in the area definition area,
the first storage area of the data storage portion includes at least a first system definition area that stores a first system definition information corresponding to a first non-contact communication system and a first section definition area that stores a first section definition information corresponding to the first encryption method, the first section definition area belonging to the first system definition area,
the first management information includes at least the first system definition information and the first section definition information,
the first system definition information includes a first system code indicating the first non-contact communication system, and the first section definition information includes a first key used for authentication to access the first section definition area and identification information for the first encryption method,
the issuing information, as the second management information, is system issuing information to issue second system definition information corresponding to a second non-contact communication system and second section definition information that belongs to the second system definition information and that corresponds to the first encryption method,
the system issuing information includes a second system code indicating the second non-contact communication system and a second key used for authentication to access a second section definition area, and
the information processing device further comprises:
a key storage portion that stores an authorization key to newly issue the system definition information; and
a mutual authentication portion that performs mutual authentication with the issuing device with the first encryption method, using the first encryption method identification information stored in the first section definition area, wherein
when the mutual authentication performed by the mutual authentication portion is successful, the issuing information receiver receives the system issuing information encrypted with the first encryption method using one of the first key and the authorization key from the issuing device,
the issuing information decryption portion uses one of the first key stored in the first section definition area and the authorization key stored in the key storage portion to decrypt the received system issuing information with the first encryption method, and
the management information issuing portion, based on the decrypted system issuing information, issues the second system definition information that includes the second system code and the second section definition information that includes the second key and the first encryption method identification information, and stores the second system definition information and the second section definition information in the second system definition area and the second section definition area respectively, the second system definition area and the second section definition area being the second storage area of the data storage portion.

9. An information processing method, comprising the steps of:
storing, by an information processing device, first management information corresponding to a first encryption method in a first storage area of a data storage portion that is capable of storing user data used in a particular service using non-contact communication and management information used to manage the user data in different storage areas for each of a plurality of different encryption methods;
receiving, by the information processing device, issuing information that is encrypted using the first encryption method from an issuing device that delivers the issuing information to issue second management information corresponding to a second encryption method;
decrypting, by the information processing device, the received issuing information using the first encryption method, based on the first management information corresponding to the first encryption method stored in the first storage area of the data storage portion; and
issuing, by the information processing device, based on the decrypted issuing information, the second management information corresponding to the second encryption method, and storing the second management information in a second storage area of the data storage portion.

10. An information processing method, comprising the steps of:
storing, by an information processing device, first management information corresponding to a first encryption method in a first storage area of a data storage portion that is capable of storing user data used in a particular service using non-contact communication and management information used to manage the user data in different storage areas for each of a plurality of different encryption methods;
receiving, by the information processing device, issuing information that is encrypted using the first encryption method from an issuing device that delivers the issuing information to issue second management information corresponding to the first encryption method;
decrypting, by the information processing device, the received issuing information using the first encryption method, based on the first management information corresponding to the first encryption method stored in the first storage area of the data storage portion; and
issuing, by the information processing device, based on the decrypted issuing information, the second management information corresponding to the first encryption method, and storing the second management information in a second storage area of the data storage portion.

11. A program that comprises instructions that command a computer to perform the steps of:
storing first management information corresponding to a first encryption method in a first storage area of a data storage portion that is capable of storing user data used in a particular service using non-contact communication and management information used to manage the user data in different storage areas for each of a plurality of different encryption methods;
receiving issuing information that is encrypted using the first encryption method from an issuing device that delivers the issuing information to issue second management information corresponding to a second encryption method;
decrypting the received issuing information using the first encryption method, based on the first management information corresponding to the first encryption method stored in the first storage area of the data storage portion; and
issuing, based on the decrypted issuing information, the second management information corresponding to the second encryption method, and storing the second management information in a second storage area of the data storage portion.

12. A program that comprises instructions that command a computer to perform the steps of:
storing first management information corresponding to a first encryption method in a first storage area of a data storage portion that is capable of storing user data used in a particular service using non-contact communication and management information used to manage the user data in different storage areas for each of a plurality of different encryption methods;
receiving issuing information that is encrypted using the first encryption method from an issuing device that delivers the issuing information to issue second management information corresponding to the first encryption method;
decrypting the received issuing information using the first encryption method, based on the first management information corresponding to the first encryption method stored in the first storage area of the data storage portion; and
issuing, based on the decrypted issuing information, the second management information corresponding to the first encryption method, and storing the second management information in a second storage area of the data storage portion.

13. A communication system, comprising:
an issuing device; and
an information processing device that is capable of communication with the issuing device; wherein
the issuing device includes
an issuing information encryption portion that encrypts with a first encryption method issuing information used to issue second management information corresponding to a second encryption method, and
an issuing information transmitter that transmits the issuing information encrypted with the first encryption method to the information processing device, and
the information processing device includes a data storage portion that has at least a first storage area storing first management information corresponding to the first encryption method and that is capable of storing user data used in a particular service using non-contact communication and management information used to manage the user data in different storage areas for each of a plurality of different encryption methods,
an issuing information receiver that receives the issuing information encrypted with the first encryption method from the issuing device,
an issuing information decryption portion that decrypts the received issuing information using the first encryption method, based on the first management information corresponding to the first encryption method stored in the first storage area of the data storage portion, and
a management information issuing portion that, based on the decrypted issuing information, issues the second management information corresponding to the second encryption method and stores the second management information in a second storage area of the data storage portion.

14. A communication system, comprising:
an issuing device; and
an information processing device that is capable of communication with the issuing device; wherein
the issuing device includes
an issuing information encryption portion that encrypts with a first encryption method issuing information used to issue second management information corresponding to the first encryption method,
an issuing information transmitter that transmits the issuing information encrypted with the first encryption method to the information processing device, and
the information processing device includes a data storage portion that has at least a first storage area storing first management information corresponding to the first encryption method and that is capable of storing user data used in a particular service using non-contact communication and management information used to manage the user data in different storage areas for each of a plurality of different encryption methods,
an issuing information receiver that receives the issuing information encrypted with the first encryption method from the issuing device,
an issuing information decryption portion that decrypts the received issuing information using the first encryption method, based on the first management information corresponding to the first encryption method stored in the first storage area of the data storage portion, and
a management information issuing portion that, based on the decrypted issuing information, issues the second management information corresponding to the first encryption method and stores the second management information in a second storage area of the data storage portion.
